(19) Europäisches Patentamt
European Patent Office
Office européen des brevets

(11) **EP 4 202 856 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22213828.1**

(22) Anmeldetag: **15.12.2022**

(51) Internationale Patentklassifikation (IPC):
*G06V 10/24* (2022.01)   *G06K 7/10* (2006.01)
*G06N 3/0464* (2023.01)   *G06V 10/774* (2022.01)
*G06V 10/778* (2022.01)   *G06V 10/82* (2022.01)
*G06V 20/68* (2022.01)   *G06K 7/14* (2006.01)
*G06N 3/084* (2023.01)   *G06V 10/10* (2022.01)
*B23K 26/18* (2006.01)   *G06K 19/06* (2006.01)
*G06N 3/02* (2006.01)   *G06N 3/09* (2023.01)

(52) Gemeinsame Patentklassifikation (CPC):
**G06V 20/68; G06K 7/10861; G06K 7/1482;**
**G06N 3/0464; G06N 3/084; G06N 3/09;**
**G06V 10/243; G06V 10/774; G06V 10/778;**
**G06V 10/82;** G06N 3/045; G06N 3/0475;
G06N 3/092

(54) **AUSLESEN VON OPTISCH LESBAREN CODES**

READING OF OPTICALLY READABLE CODES

LECTURE DE CODES LISIBLES OPTIQUEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2021 EP 21216812**
**22.12.2021 EP 21216923**
**10.02.2022 EP 22156217**

(43) Veröffentlichungstag der Anmeldung:
**28.06.2023 Patentblatt 2023/26**

(73) Patentinhaber: **Bayer Aktiengesellschaft**
**51373 Leverkusen (DE)**

(72) Erfinder:
• **Schaefer, Dirk**
**50171 Kerpen (DE)**
• **Hoetter, Benjamin**
**50939 Köln (DE)**
• **Fischer, Gregor**
**51491 Overath (DE)**
• **Ruelberg, Klaus**
**53332 Bornheim (DE)**

(74) Vertreter: **BIP Patents**
**c/o Bayer Intellectual Property GmbH**
**Alfred-Nobel-Straße 50**
**40789 Monheim am Rhein (DE)**

(56) Entgegenhaltungen:
EP-A1- 3 640 901     WO-A1-2020/119301
GB-A- 2 585 938      US-A1- 2005 082 370
US-A1- 2012 211 555   US-A1- 2020 175 317
US-A1- 2020 334 650   US-A1- 2021 012 076

• PU HAITAO ET AL: "Quick response barcode deblurring via doubly convolutional neural network", MULTIMEDIA TOOLS AND APPLICATIONS, vol. 78, no. 1, 10 March 2018 (2018-03-10), KLUWER ACADEMIC PUBLISHERS, BOSTON, US, pages 897 - 912, XP036695251, ISSN: 1380-7501, [retrieved on 20180310], DOI: 10.1007/S11042-018-5802-2

**Beschreibung**

Die vorliegende Erfindung befasst sich mit dem technischen Gebiet der Kennzeichnung von Gegenständen mit optisch lesbaren Codes und dem Auslesen (Dekodieren) der Codes. Gegenstände der vorliegenden Erfindung sind ein Verfahren, ein System und ein Computerprogrammprodukt zum Dekodieren von optisch lesbaren Codes, die in Oberflächen von Gegenständen eingebracht sind.

Die Verfolgung von Gütern und Waren spielt in vielen Bereichen der Wirtschaft eine wichtige Rolle.

GB2585938A offenbart ein Verfahren zur Objektidentifizierung, das die Erkennung eines Objektkandidaten in einem Bild und den Vergleich von Kandidatendaten mit lokal gespeicherten Vorlagen umfasst.

Waren und Güter bzw. deren Verpackungen und/oder Behälter werden oft mit einer eindeutigen Kennung (z.B. einer Seriennummer) versehen (Serialisierung), um sie entlang ihrer Lieferkette verfolgen und Wareneingänge und -ausgänge maschinell erfassen zu können.

In vielen Fällen ist die Kennung in einer optisch lesbaren Form, z.B. in Form eines Strichcodes (z.B. EAN-8-Barcode) oder eines Matrixcodes (z.B. QR-Code, Data Matrix-Code) auf den Waren und Gütern bzw. deren Verpackungen und/oder Behältern aufgebracht.

US20050082370A1 offenbart ein System und Verfahren zur Dekodierung von Strichcodes aus Bildern, die mit einem mobilen Gerät aufgenommen werden.

H. Pu et al. offenbaren ein Verfahren zum Entschleiern von QR-Codes mittels eines neuronalen Netzwerks (H. Pu et al.: Quick response barcode deblurring via douly convolutional neural network, Multimed Tools Appl (2019) 78: 897-912).

Hinter dem Strich- oder Matrixcode verbirgt sich oft eine Seriennummer, die üblicherweise Auskunft über Art der Ware oder des Gutes und über die Herkunft liefert.

Bei manchen pharmazeutischen Produkten ist sogar eine individuelle Kennzeichnung von Einzelpackungen erforderlich. Gemäß Art. 54a Abs. 1 der durch die sog. EU-Fälschungsschutzrichtlinie 2011/62/EU (FMD) geänderten Richtlinie 2001/83/EG sind zumindest verschreibungspflichtige Arzneimittel mit einem individuellen Erkennungsmerkmal (engl.: *Unique Identifier*) zu kennzeichnen, das insbesondere eine Überprüfung der Echtheit und die Identifizierung von Einzelpackungen ermöglicht.

Pflanzliche und tierische Erzeugnisse werden üblicherweise lediglich mit einer Seriencode versehen. Bei pflanzlichen und tierischen Erzeugnissen wird eine Kennzeichnung üblicherweise auf eine Verpackung und/oder einen Behälter zum Beispiel in Form von Aufklebern aufgebracht.

In manchen Fällen werden Kennungen auch direkt auf pflanzliche oder tierische Erzeugnisse aufgebracht. Eier werden beispielsweise in der Europäischen Union mit einem Erzeugercode versehen, aus dem die Haltungsform des Huhns, das Land, aus dem das Ei stammt, und der Betrieb, aus dem das Ei stammt, abgeleitet werden kann. Zunehmend werden auch die Schale von Obst- und Gemüseeinheiten mit einer Kennzeichnung versehen (siehe z.B.: E. Etxeberria *et al.: Anatomical and Morphological Characteristics of Laser Etching Depressions for Fruit Labeling,* 2006, HortTechnology. 16, 10.21273/HORTTECH.16.3.0527). Eine direkte Kennzeichnung von pflanzlichen oder tierischen Erzeugnissen (ohne die Verwendung von Aufklebern) schont Ressourcen und dient der Fälschungssicherheit, da eine in eine Oberfläche eines pflanzlichen oder tierischen Erzeugnisses eingebrachte Kennung nicht so einfach entfernt und/oder ausgetauscht werden kann, wie ein Aufkleber oder ein Aufdruck.

Verbraucher zeigen ein zunehmendes Interesse an der Herkunft und der Lieferkette von pflanzlichen und tierischen Erzeugnissen. Sie wollen beispielsweise wissen, woher das jeweilige Erzeugnis stammt, ob und wie es behandelt wurde (z.B. mit Pflanzenschutzmitteln), wie lange der Transport gedauert hat, welche Bedingungen während des Transports geherrscht haben und/oder dergleichen.

In EP3896629A1 wird vorgeschlagen, pflanzliche und tierische Erzeugnisse mit einer individuellen Kennung in Form eines optisch lesbaren Codes zu versehen. Der Code kann von einem Verbraucher beispielsweise mittels der Kamera seines Smartphones gelesen werden. Anhand des ausgelesenen Codes können dem Verbraucher verschiedene Informationen zu dem pflanzlichen oder tierischen Erzeugnis angezeigt werden. EP3896629A1 schlägt vor, den optisch lesbaren Code beispielsweise mittels eines Lasers in eine Oberfläche des pflanzlichen oder tierischen Erzeugnisses einzubringen. Ein in die Oberfläche eines pflanzlichen oder tierischen Erzeugnisses eingebrachter optischer Code weist einen geringeren Kontrast gegenüber dem umliegenden Gewebe auf und ist damit schwieriger auszulesen als beispielsweise ein mit schwarzer Farbe auf weißem Hintergrund aufgebrachter optischer Code, wie er üblicherweise bei Aufklebern oder Anhängern vorliegt. Ferner weisen optische Codes auf unterschiedlichen Gegenständen ein unterschiedliches Erscheinungsbild auf. Werden optisch lesbare Codes mittels eines Lasers beispielsweise auf gekrümmte Oberflächen wie sie bei vielen Früchten und Gemüsesorten vorliegen, aufgebracht, kann es zu einer Verzerrung der Codes kommen, die ein Auslesen erschwert. Werden optisch lesbare Codes auf glatte Oberflächen aufgebracht, können beim Auslesen Reflexionen (z.B. durch Umgebungslicht) auf der Oberfläche auftreten, die ein Auslesen erschweren. Oberflächen von Früchten und Gemüsen können uneinheitlich sein, z.B. können Äpfel Stippen und Flecken aufweisen. Kartoffeln können Unebenheiten aufweisen. Solche Uneinheitlichkeiten und Unebenheiten können ein Auslesen von Codes erschweren.

Es stellt sich damit die Aufgabe, Mittel bereitzustellen, mit denen optisch lesbare Codes auf einer Vielzahl von verschiedenen Gegenständen, insbesondere auf einer Vielzahl von pflanzlichen und tierischen Erzeugnissen, von einem Verbraucher mit einfachen Mitteln, wie beispielsweise einem Smartphone, zuverlässig ausgelesen werden können.

Diese Aufgabe wird durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist ein computer-implementiertes Verfahren umfassend die Schritte

- Empfangen mindestens einer Bildaufnahme von einem Gegenstand, wobei der Gegenstand einen optisch lesbaren Code umfasst, wobei der optisch lesbare Code in eine Oberfläche des Gegenstands eingebracht ist,

- Identifizieren des Gegenstands auf Basis der mindestens einen Bildaufnahme,

- Auslesen von Transformationsparametern für den identifizierten Gegenstand aus einer Datenbank,

- Durchführen einer oder mehrerer Transformationen der mindestens einen Bildaufnahme gemäß den Transformationsparametern und dabei Erzeugen einer transformierten Bildaufnahme,

  ○ wobei die Transformationsparameter festlegen, welche Transformation/Transformationen durchgeführt werden, und bei mehreren Transformationen, in welcher Reihenfolge sie durchgeführt werden,

  ○ wobei mindestens eine Transformation mit Hilfe eines trainierten Modells des maschinellen Lernens durchgeführt wird, wobei das Durchführen einer Transformation mit Hilfe des trainierten Modells des maschinellen Lernens umfasst:

    ▪ Zuführen der mindestens einen Bildaufnahme dem trainierten Modell des maschinellen Lernens,

    ▪ Empfangen einer transformierten Bildaufnahme von dem trainierten Modell des maschinellen Lernens,

  ○ wobei das trainierte Modell des maschinellen Lernens auf Basis von Trainingsdaten trainiert wurde, wobei die Trainingsdaten für jeden Gegenstand einer Vielzahl von Gegenständen i) mindestens eine Referenz-Bildaufnahme eines in eine Oberfläche des Gegenstands eingebrachten optischen Codes als Eingabedaten und ii) eine transformierte Referenz-Bildaufnahme des optischen Codes als Zieldaten umfassen, wobei das Dekodieren des optischen Codes in der transformierten Referenz-Bildaufnahme weniger Dekodierfehler erzeugt als das Dekodieren des optischen Codes in der Referenz-Bildaufnahme, wobei das Trainieren für jeden Gegenstand der Vielzahl an Gegenständen umfasst:

    ▪ Eingeben der mindestens einen Referenz-Bildaufnahme in das Modell des maschinellen Lernens,

    ▪ Empfangen einer vorhergesagten transformierten Referenz-Bildaufnahme von dem Modell des maschinellen Lernens,

    ▪ Berechnen einer Abweichung zwischen der transformierten Referenz-Bildaufnahme und der vorhergesagten transformierten Referenz-Bildaufnahme,

    ▪ Modifizieren der Modellparameter im Hinblick auf eine Reduzierung der Abweichung,

- Dekodieren des in der transformierten Bildaufnahme abgebildeten optisch lesbaren Codes.

Ein weiterer Gegenstand der vorliegenden Erfindung ist ein System umfassend mindestens einen Prozessor, wobei der Prozessor konfiguriert ist,

- mindestens eine Bildaufnahme von einem Gegenstand zu empfangen, wobei der Gegenstand einen optisch lesbaren Code umfasst, wobei der optisch lesbare Code in eine Oberfläche des Gegenstands eingebracht ist,
- den Gegenstand auf Basis der mindestens einen Bildaufnahme zu identifizieren,
- Transformationsparameter für den identifizierten Gegenstand aus einer Datenbank auszulesen,
- eine oder mehrere Transformationen der mindestens einen Bildaufnahme gemäß den Transformationsparametern durchzuführen und dabei eine transformierte Bildaufnahme zu erzeugen,

◦ wobei die Transformationsparameter festlegen, welche Transformation/Transformationen durchgeführt werden, und bei mehreren Transformationen, in welcher Reihenfolge sie durchgeführt werden,

◦ wobei mindestens eine Transformation mit Hilfe eines trainierten Modells des maschinellen Lernens durchgeführt wird, wobei das Durchführen einer Transformation mit Hilfe des trainierten Modells des maschinellen Lernens umfasst:

■ Zuführen der mindestens einen Bildaufnahme dem trainierten Modell des maschinellen Lernens,

■ Empfangen einer transformierten Bildaufnahme von dem trainierten Modell des maschinellen Lernens,

◦ wobei das trainierte Modell des maschinellen Lernens auf Basis von Trainingsdaten trainiert wurde, wobei die Trainingsdaten für jeden Gegenstand einer Vielzahl von Gegenständen i) mindestens eine Referenz-Bildaufnahme eines in eine Oberfläche des Gegenstands eingebrachten optischen Codes als Eingabedaten und ii) eine transformierte Referenz-Bildaufnahme des optischen Codes als Zieldaten umfassen, wobei das Dekodieren des optischen Codes in der transformierten Referenz-Bildaufnahme weniger Dekodierfehler erzeugt als das Dekodieren des optischen Codes in der Referenz-Bildaufnahme, wobei das Trainieren für jeden Gegenstand der Vielzahl an Gegenständen umfasst:

■ Eingeben der mindestens einen Referenz-Bildaufnahme in das Modell des maschinellen Lernens,

■ Empfangen einer vorhergesagten transformierten Referenz-Bildaufnahme von dem Modell des maschinellen Lernens,

■ Berechnen einer Abweichung zwischen der transformierten Referenz-Bildaufnahme und der vorhergesagten transformierten Referenz-Bildaufnahme,

■ Modifizieren der Modellparameter im Hinblick auf eine Reduzierung der Abweichung,

- den in der transformierten Bildaufnahme abgebildeten optisch lesbaren Code zu dekodieren.

Ein weiterer Gegenstand der vorliegenden Erfindung ist ein Computerprogrammprodukt umfassend einen Datenträger, auf dem ein Computerprogramm gespeichert ist, wobei das Computerprogramm in einen Arbeitsspeicher eines Computers geladen werden kann und dort den Computer dazu veranlasst, folgende Schritte ausführen:

- Empfangen mindestens einer Bildaufnahme von einem Gegenstand, wobei der Gegenstand einen optisch lesbaren Code umfasst, wobei der optisch lesbare Code in eine Oberfläche des Gegenstands eingebracht ist,

- Identifizieren des Gegenstands auf Basis der mindestens einen Bildaufnahme,

- Auslesen von Transformationsparametern für den identifizierten Gegenstand aus einer Datenbank,

- Durchführen einer oder mehrerer Transformationen der mindestens einen Bildaufnahme gemäß den Transformationsparametern und dabei Erzeugen einer transformierten Bildaufnahme,

◦ wobei die Transformationsparameter festlegen, welche Transformation/Transformationen durchgeführt werden, und bei mehreren Transformationen, in welcher Reihenfolge sie durchgeführt werden,

◦ wobei mindestens eine Transformation mit Hilfe eines trainierten Modells des maschinellen Lernens durchgeführt wird, wobei das Durchführen einer Transformation mit Hilfe des trainierten Modells des maschinellen Lernens umfasst:

■ Zuführen der mindestens einen Bildaufnahme dem trainierten Modell des maschinellen Lernens,

■ Empfangen einer transformierten Bildaufnahme von dem trainierten Modell des maschinellen Lernens,

o wobei das trainierte Modell des maschinellen Lernens auf Basis von Trainingsdaten trainiert wurde, wobei die Trainingsdaten für jeden Gegenstand einer Vielzahl von Gegenständen i) mindestens eine Referenz-Bildaufnahme eines in eine Oberfläche des Gegenstands eingebrachten optischen Codes als Eingabedaten und ii) eine transformierte Referenz-Bildaufnahme des optischen Codes als Zieldaten umfassen, wobei das Dekodieren des optischen Codes in der transformierten Referenz-Bildaufnahme weniger Dekodierfehler erzeugt als das Dekodieren des optischen Codes in der Referenz-Bildaufnahme, wobei das Trainieren für jeden Gegenstand der Vielzahl an Gegenständen umfasst:

- Eingeben der mindestens einen Referenz-Bildaufnahme in das Modell des maschinellen Lernens,

- Empfangen einer vorhergesagten transformierten Referenz-Bildaufnahme von dem Modell des maschinellen Lernens,

- Berechnen einer Abweichung zwischen der transformierten Referenz-Bildaufnahme und der vorhergesagten transformierten Referenz-Bildaufnahme,

- Modifizieren der Modellparameter im Hinblick auf eine Reduzierung der Abweichung,

- Dekodieren des in der transformierten Bildaufnahme abgebildeten optisch lesbaren Codes.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände in analoger Weise gelten, unabhängig davon, in welchem Kontext (System, Verfahren, Computerprogrammprodukt) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung stellt Mittel zum Auslesen eines optisch lesbaren Codes bereits. Die Begriffe "Auslesen" und "Dekodieren" werden in dieser Beschreibung synonym verwendet.

Unter dem Begriff "optisch lesbarer Code" werden Markierungen verstanden, die vorzugsweise mit Hilfe einer Kamera erfasst und beispielsweise in alphanumerische Zeichen umgewandelt werden können.

Beispiele für optisch lesbare Codes sind Strichcodes (Barcodes), gestapelte Codes, Composite Codes, Matrixcodes und 3D Codes. Auch alphanumerische Zeichen, die mittels automatisierter Texterkennung (engl. *optical character recognition,* Abkürzung: OCR) erfasst (interpretiert, gelesen) und digitalisiert werden können, fallen unter den Begriff optisch lesbare Codes.

Optisch lesbare Codes gehören zu den maschinenlesbaren Codes, d.h. zu Codes, die mittels einer Maschine erfasst und verarbeitet werden können. Im Fall der optisch lesbaren Codes umfasst eine solche "Maschine" üblicherweise eine Kamera.

Eine Kamera umfasst üblicherweise einen Bildsensor und optische Elemente. Der Bildsensor ist eine Vorrichtung zur Aufnahme von zweidimensionalen Abbildern aus Licht auf elektrischem Weg. Üblicherweise handelt es sich um einen halbleiterbasierten Bildsensor wie beispielsweise ein CCD-(CCD = *charge-coupled device*) oder CMOS-Sensor (CMOS = *complementary metal-oxidesemiconductor*). Die optischen Elemente (Linsen, Blenden und dergleichen) dienen einer möglichst scharfen Abbildung des Gegenstands (Objekts), von dem eine digitale Bildaufnahme erzeugt werden soll, auf dem Bildsensor.

Optisch lesbare Codes haben (z.B. gegenüber RFID-Transpondern) den Vorteil, dass sie von vielen Verbrauchern mit einfachen Mitteln ausgelesen werden können. So verfügen viele Verbraucher beispielsweise über ein Smartphone, das mit einer oder mehreren Kameras ausgestattet ist. Mittels einer solchen Kamera kann eine Abbildung des optisch lesbaren Codes auf dem Bildsensor der Kamera erzeugt werden. Die Abbildung kann digitalisiert und von einem Computerprogramm, das auf dem Smartphone gespeichert ist, bearbeitet und/oder gespeichert werden. Ein solches Computerprogramm kann konfiguriert sein, den optisch lesbaren Code zu identifizieren und zu interpretieren, d.h. in eine andere Form zu übersetzen wie beispielsweise in eine Zahlenfolge, eine Folge von Buchstaben und/oder dergleichen, je nachdem, welche Information in Form des optisch lesbaren Codes vorliegt.

Gemäß der vorliegenden Erfindung ist der optisch lesbare Code in eine Oberfläche eines Gegenstands eingebracht. Ein solcher Gegenstand ist ein realer, körperlicher, fassbarer Gegenstand. Bei einem solchen Gegenstand kann es sich um einen natürlichen Gegenstand oder um einen industriell hergestellten Gegenstand handelt. Beispiele für Gegenstände im Sinne der vorliegenden Erfindung sind: Werkzeuge, Maschinenbauteile, Platinen, Chips, Behälter, Verpackungen, Schmuck, Designobjekte, Kunstobjekte, Arzneimittel (z.B. in Form von Tabletten oder Kapseln), Arzneimittelverpackungen sowie pflanzliche und tierische Erzeugnisse.

In einer bevorzugten Ausführungsform der vorliegenden Erfindung handelt es sich bei dem Gegenstand um ein Arzneimittel (z.B. in Form einer Tablette oder einer Kapsel).

In einer weiteren bevorzugten Ausführungsform der vorliegenden Erfindung handelt es sich bei dem Gegenstand um ein industriell hergestelltes Erzeugnis wie beispielsweise ein Bauteil für eine Maschine.

In einer weiteren bevorzugten Ausführungsform der vorliegenden Erfindung handelt es sich bei dem Gegenstand um ein pflanzliches oder tierisches Erzeugnis.

Ein "pflanzliches Erzeugnis" ist eine einzelne Pflanze oder ein Teil einer Pflanze (z.B. eine Frucht) oder eine Gruppe von Pflanzen oder eine Gruppe von Teilen einer Pflanze. Ein "tierisches Erzeugnis" ist ein Tier oder ein Teil eines Tieres oder eine Gruppe von Tieren oder eine Gruppe von Teilen eines Tieres oder ein Gegenstand, der von einem Tier hervorgebracht worden ist (wie z.B. ein Hühnerei). Auch industriell verarbeitete Erzeugnisse, wie beispielsweise Käse und Wurstwaren sollen in dieser Beschreibung unter den Begriff "pflanzliches oder tierisches Erzeugnis" fallen.

Üblicherweise handelt es sich bei dem pflanzlichen oder tierischen Erzeugnis um einen Teil einer Pflanze oder eines Tieres, der zum Verzehr durch einen Menschen oder ein Tier geeignet und/oder gedacht ist.

Vorzugsweise handelt es sich bei dem pflanzlichen Erzeugnis zumindest um einen Teil einer Kulturpflanze. Unter dem Begriff "Kulturpflanze" wird eine Pflanze verstanden, die durch das Eingreifen der Menschen zielgerichtet als Nutzpflanze angebaut wird. In einer bevorzugten Ausführungsform handelt es sich bei der Kulturpflanze um eine Obstpflanze oder eine Gemüsepflanze. Auch wenn Pilze biologisch nicht zu den Pflanzen zählen, sollen auch Pilze, insbesondere die Fruchtkörper von Pilzen, unter den Begriff pflanzliches Erzeugnis fallen.

Vorzugsweise handelt es sich bei der Kulturpflanze um eine der in der folgenden Enzyklopädie aufgeführten Pflanzen: Christopher Cumo: Encyclopedia of Cultivated Plants: From Acacia to Zinnia, Band 1 bis 3, ABC-CLIO, 2013, ISBN 9781598847758.

Ein pflanzliches oder tierisches Erzeugnis kann beispielsweise ein Apfel, eine Birne, eine Zitrone, eine Orange, eine Mandarine, eine Limone, eine Grapefruit, eine Kiwi, eine Banane, ein Pfirsich, eine Pflaume, eine Mirabelle, eine Aprikose, eine Tomate, ein Kohl (ein Blumenkohl, ein Weißkohl, ein Rotkohl, ein Grünkohl, Rosenkohl oder dergleichen), eine Melone, ein Kürbis, eine Gurke, eine Paprika, eine Zucchini, eine Aubergine, eine Kartoffel, eine Süßkartoffel, eine Lauchstange, Sellerie, ein Kohlrabi, ein Rettich, eine Mohrrübe, eine Pastinake, eine Schwarzwurzel, ein Spargel, eine Zuckerrübe, eine Ingwerwurzel, Rhabarber, eine Kokosnuss, eine Paranuss, eine Walnuss, eine Haselnuss, eine Esskastanie, ein Ei, ein Fisch, ein Stück Fleisch, ein Stück Käse, eine Wurst und/oder dergleichen sein.

Der optisch lesbare Code ist in eine Oberfläche des Gegenstands eingebracht. Das bedeutet, dass der optisch lesbare Code nicht in Form eines Anhängers an den Gegenstand angebracht ist und auch nicht in Form eines Aufklebers auf den Gegenstand aufgebracht ist und auch nicht mit einem Farbstoff auf den Gegenstand aufgedruckt ist. Stattdessen wurde eine Oberfläche des Gegenstands so verändert, dass die Oberfläche selbst den optisch lesbaren Code trägt.

Bei pflanzlichen Erzeugnissen und Eiern kann es sich bei der Oberfläche beispielsweise um die Schale handeln.

Der optisch lesbare Code kann in den Gegenstand eingraviert, eingeätzt, eingebrannt, eingeprägt und/oder auf sonstige Weise in eine Oberfläche des Gegenstands eingebracht sein. Vorzugsweise ist der optisch lesbare Code mittels eines Lasers in die Oberfläche des Gegenstands (zum Beispiel in die Schale bei einem Obst oder einem Gemüse) eingebracht. Dabei kann der Laser Farbstoffmoleküle in der Oberfläche des Gegenstands verändern (z.B. ausbleichen und/oder zerstören) und/oder lokal zu Verbrennungen und/oder Zerstörungen und/oder chemischen und/oder physikalischen Veränderungen des Gewebes führen (z.B. Verdampfen von Wasser, Denaturieren von Eiweiß und/oder ähnliches), so dass ein Kontrast zum umliegenden (nicht durch den Laser veränderten) Teil der Oberfläche entsteht.

Der optisch lesbare Code kann auch mittels eines Wasserstrahls oder Sandstrahls in eine Oberfläche des Gegenstands eingebracht sein.

Der optische lesbare Code kann auch mechanisch durch Ritzen, Stechen, Scheiden, Raspeln, Schaben, Stempeln und/oder dergleichen in eine Oberfläche des Gegenstands eingebracht sein.

Details zur Kennzeichnung von Gegenständen, insbesondere von pflanzlichen oder tierischen Erzeugnissen sind dem Stand der Technik zu entnehmen (siehe zum Beispiel EP2281468A1, WO2015/117438A1, WO2015/117541A1, WO2016/118962A1, WO2016/118973A1, DE102005019008A, WO2007/130968A2, US5660747, EP1737306A2, US10481589, US20080124433).

Vorzugsweise ist der optisch lesbare Code mit einem Kohlenstoffdioxidlaser ($CO_2$-Laser) in die Oberfläche des Gegenstands eingebracht worden.

Von dem Gegenstand oder von einem Teil des Gegenstands wird mindestens eine Bildaufnahme erzeugt. Die mindestens eine Bildaufnahme zeigt den in einer Oberfläche des Gegenstands eingebrachten optisch lesbaren Code.

Unter dem Begriff "Bildaufnahme" wird vorzugsweise eine zweidimensionale Abbildung des Gegenstands oder eines Teils davon verstanden. Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Software verarbeitet, bearbeitet und reproduziert sowie in standardisierte Datenformate konvertiert werden, wie zum Beispiel JPEG (Grafikformat der *Joint Photographie Experts Group),* PNG (*Portable Network Graphics*) oder SVG (*Scalable Vector Graphics*). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildpunkt einer digitalen Bilddatei ist üblicherweise eine Farbe zugeordnet. Die für einen Bildpunkt verwendete Kodierung der Farbe definiert sich unter anderem über den Farbraum und die Farbtiefe. Der einfachste Fall ist ein Binärbild, bei dem ein Bildpunkt einen Schwarzweiß-Wert speichert. Bei einem Bild, dessen Farbe über den so genannten RGB-Farbraum definiert ist (RGB steht für die Grundfarben Rot, Grün und Blau), besteht jeder Bildpunkt aus drei Farbwerten, einem Farbwert für die Farbe Rot, einem Farbwert für die Farbe Grün und einem Farbwert für die Farbe Blau. Die Farbe eines Bildpunktes ergibt durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint der entsprechende Bildpunkt schwarz; haben alle drei Kanäle den Tonwert 255, erscheint der entsprechende Bildpunkt weiß. Bei der Ausführung der vorliegenden Erfindung werden digitale Bildaufnahmen bestimmten Operationen (Transformationen) unterworfen. Die Operationen betreffen dabei überwiegend die Bildpunkte als sogenannte räumliche Operatoren wie beispielsweise bei einem Kantendetektor, bzw. die Tonwerte der einzelnen Bildpunkte wie beispielsweise bei Farbraumtransformationen. Es gibt eine Vielzahl an möglichen digitalen Bildformaten und Farbkodierungen. Vereinfachend wird in dieser Beschreibung davon ausgegangen, dass die vorliegenden Bilder RGB-Rastergrafiken mit einer spezifischen Zahl an Bildpunkten sind. Diese Annahme soll jedoch in keiner Weise limitierend verstanden werden. Dem Fachmann der Bildbearbeitung ist klar, wie er die Lehre dieser Beschreibung auf Bilddateien, die in anderen Bildformaten vorliegen und/oder bei denen die Farbwerte anders kodiert sind, übertragen kann.

Bei der mindestens einen Bildaufnahme kann es sich auch um einen oder mehrere Ausschnitte aus einer Videosequenz handeln.

Die mindestens eine Bildaufnahme wird mit Hilfe einer Kamera oder mehreren Kameras erzeugt. Vorzugsweise wird die mindestens eine Bildaufnahme von einer oder mehreren Kameras eines Smartphones erzeugt.

Die Verwendung von mehreren Kameras, die einen Gegenstand aus unterschiedlichen Richtungen betrachten und Bildaufnahmen aus unterschiedlichen Blickrichtungen erzeugen, hat den Vorteil, dass Tiefeninformationen erfasst werden. Aus solchen Tiefeninformationen lassen sich beispielsweise Informationen über vorhandene Krümmungen des abgebildeten Gegenstands ableiten und/oder herauslesen.

Die mindestens eine Bildaufnahme zeigt den in die Oberfläche des Gegenstands eingebrachten optisch lesbaren Code.

Üblicherweise unterscheidet sich das Erscheinungsbild eines optisch lesbaren Codes, der in eine Oberfläche eines Gegenstands eingebracht ist, von einem optisch lesbaren Code, der mit schwarzer Farbe auf eine ebene weiße Fläche aufgedruckt worden ist.

Das Einbringen eines optisch lesbaren Codes in eine Oberfläche eines Gegenstands führt üblicherweise zu einer Markierung, die einen geringeren Kontrast aufweist als beispielsweise ein optisch lesbarer Code in Form eines schwarzen oder farbigen Aufdrucks auf einem weißen Aufkleber. Durch die Möglichkeit der individuellen Gestaltung des Aufklebers oder Anhängers kann der Kontrast optimiert werden; beispielsweise weist eine schwarze Markierung (z.B. ein schwarzer Strichcode oder ein schwarzer Matrixcode) auf einem weißen Untergrund einen sehr hohen Kontrast auf. Solche hohen Kontraste werden durch das Einbringen von optisch lesbaren Codes in eine Oberfläche eines Gegenstands, insbesondere bei pflanzlichen oder tierischen Erzeugnissen, bei Arzneimitteln und/oder bei Bauteilen üblicherweise nicht erreicht. Dies kann zu Schwierigkeiten beim Auslesen der Codes führen. Zudem haben optisch lesbare Codes, die beispielsweise mittels eines Lasers in eine Oberfläche eines Gegenstands eingebacht werden, für verschiedene Gegenstände ein unterschiedliches Erscheinungsbild. Mit anderen Worten: optisch lesbare Codes, die beispielsweise in einen Apfel eingebracht werden, sehen üblicherweise anders aus als optisch lesbare Codes, die in eine Banane, eine Tomate, einen Kürbis oder in eine Kartoffel eingebracht werden. Auch die jeweilige Sorte einer Frucht kann einen Einfluss auf das Erscheinungsbild des optisch lesbaren Codes haben: optisch lesbare Codes in einem Apfel der Sorte "Granny Smith" sehen anders aus als optisch lesbare Codes in einem Apfel der Sorte "Pink Lady". Auch die Struktur der Oberfläche eines Gegenstands, insbesondere eines pflanzlichen oder tierischen Erzeugnisses, kann einen Einfluss auf das Erscheinungsbild eines optisch lesbaren Codes haben: die vergleichsweise raue Oberflächenstruktur einer Kiwi kann das Auslesen eines optisch lesbaren Codes genauso erschweren wie Unebenheiten und Flecken in der Schale von Kartoffeln und Äpfeln. Üblicherweise weisen die Oberflächen von Früchten, Gemüsen, Tabletten, Kapseln und vielen Bauteilen Krümmungen auf. Wird ein optischer Code in eine gekrümmte Oberfläche eingebracht, kann es zu einer Verzerrung des Codes kommen; der Code kann beispielsweise eine kissenförmige oder tonnenförmige Verzeichnung aufweisen. Solche Verzerrungen/Verzeichnungen können das Dekodieren von Codes erschweren. Das Ausmaß einer Verzeichnung hängt dabei üblicherweise vom Grad der Krümmung ab. Wird ein optisch lesbarer Code mit einer Größe von 2 cm x 2 cm in einen Apfel eingebracht, ist die Verzeichnung größer, als wenn derselbe Code in eine Melone eingebracht wird. Auf annähernd kugelförmigen Erzeugnissen (z.B. Apfel, Tomate, Melone) ergeben sich zudem andere Verzerrungen/Verzeichnungen als auf annährend zylinderförmigen Erzeugnissen (z.B. Gurken). Glatte Oberflächen (wie beispielsweise im Fall von Äpfeln) erzeugen mehr Reflexionen (z.B. durch Umgebungslicht) als raue Oberflächen (wie beispielsweise im Fall einer Kiwi).

Die genannten Eigenschaften des Gegenstands (Unebenheiten, Uneinheitlichkeiten, Flecken, gekrümmte Flächen, glatte (spiegelnde) Flächen, Farbgebung, Textur, Oberflächenrauigkeit und/oder dergleichen) werden in dieser Beschreibung auch als Störfaktoren bezeichnet.

Störfaktoren sind Merkmale des Gegenstands und/oder des in eine Oberfläche des Gegenstands eingebrachten optisch lesbaren Codes, die zu Störungen in der mindestens einen Bildaufnahme führen.

Derartige Störungen sind beispielsweise Verzerrungen/Verzeichnungen, Lichtreflexe, Code-Elemente mit unterschiedlichen Färbungen und/oder Größen und/oder dergleichen.

Störfaktoren und Störungen können dazu führen, dass Elemente eines optisch lesbaren Codes, so wie sie in der mindestens einen Bildaufnahme abgebildet sind, nicht erkannt oder fehlinterpretiert werden.

Störfaktoren und Störungen können dazu führen, dass Merkmale des Gegenstands, so wie er in der mindestens einen Bildaufnahme abgebildet ist, als Merkmale eines optischen Codes interpretiert werden, obwohl sie nicht Teil des optisch lesbaren Codes sind.

Mit Hilfe der vorliegenden Erfindung werden ein oder mehrere Störungen in der mindestens einen Bildaufnahme reduziert und/oder eliminiert. Dies geschieht mit Hilfe einer oder mehrerer Transformationen.

Eine "Transformation" ist eine Funktion oder ein Operator, die/der ein oder mehrere Bilder als Eingabe entgegennimmt und ein Bild als Ausgabe erzeugt. Die Transformation kann dafür sorgen, dass ein optisch lesbarer Code, der auf einem oder mehreren Eingabebildern abgebildet ist, in dem Ausgabebild weniger Störungen aufweist. Eine Transformation kann beispielsweise dafür sorgen, dass Reflexionen von Licht auf der Oberfläche des Gegenstands im Ausgabebild gegenüber dem Eingabebild reduziert sind. Eine Transformation kann beispielsweise dafür sorgen, dass Unebenheiten und/oder Uneinheitlichkeiten auf der Oberfläche des Gegenstands im Ausgabebild weniger deutlich in Erscheinung treten als im Eingabebild. Allgemein sorgt die Transformation dafür, dass das Ausgabebild mit einer geringeren Wahrscheinlichkeit einen Dekodierfehler beim Dekodieren des abgebildeten optisch lesbaren Codes erzeugt als das Eingabebild.

Beispiele für Transformationen sind weiter unten beschrieben.

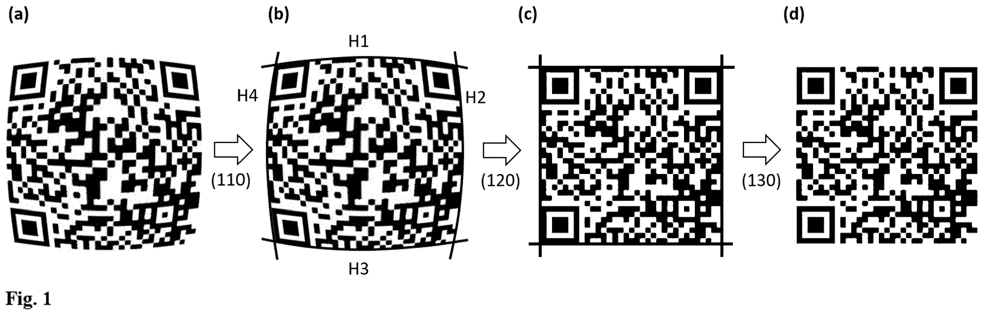

Störungen können mit klassischen Bildbearbeitungstechniken reduziert und/oder eliminiert werden. Als ein Beispiel sei die Korrektur einer Verzeichnung genannt. Optisch lesbare Codes, die auf gekrümmten Oberflächen aufgebracht sind, weisen oft Verzeichnungen auf. Dies ist schematisch anhand eines Beispiels in Fig. 1 gezeigt. Fig. 1 (a) zeigt einen optisch lesbaren Code. Es handelt sich dabei um einen QR-Code. Der QR-Code weist eine Kissenverzeichnung auf. Ursache der Kissenverzeichnung kann eine gekrümmte Oberfläche des Gegenstands sein. In Fig. 1 (b) wurden vier Hüllkurven H1, H2, H3 und H4 ermittelt (Schritt (110)), die den optisch lesbaren Code zu den vier Seiten begrenzt. Die vier Hüllkurven schließen eine Fläche ein. Die Fläche innerhalb der Hüllkurven trägt den optisch lesbaren Code. Bei den Hüllkurven kann es sich beispielsweise um Kreisbögen oder Ellipsenabschnitte oder Polynome oder dergleichen handeln. In einer Verzeichniskorrektur kann der kissenförmig verzerrte Code innerhalb der Hüllkurven einer Transformation unterzogen werden (Schritt (120)), die die kissenförmige Fläche auf ein Quadrat abbildet (Fig. 1 (c)). Derartige Korrekturen sind in Lehrbüchern der Bildbearbeitung und in wissenschaftlichen Publikationen zu dem Thema beschrieben (siehe z.B.: J. Park et al.: Lens Distortion Correction Using Ideal Image Coordinates, Consumer Electronics IEEE Transactions on, 55, 2009, 987 - 991, 10.1109/TCE.2009.5278053; X. Wang, R. Klette: Geometrie Correction of Projected Rectangular Pictures, 2005, http://citr.auckland.ac.nz/techreports/2005/CITR-TR-167.pdf. Fig. 1 (d) zeigt den transformierten QR-Code, der keine Verzeichnung mehr aufweist. Er kann in einem weiteren Schritt dekodiert werden. Die Wahrscheinlichkeit, dass beim Dekodieren Dekodierfehler auftreten, ist bei dem Code in Fig. 1 (d) gegenüber dem in Fig. 1 (a) gezeigten Code reduziert.

Auch Lichtreflexe können mit klassischen Bildbearbeitungstechniken reduziert und/oder eliminiert werden.

Unter "klassischen" Bildbearbeitungstechniken werden alle Maßnahmen und Operationen verstanden, die nicht auf der Verwendung eines Modells des maschinellen Lernens, das in einem Lernverfahren anhand von Referenz-Bildaufnahmen trainiert wurde, beruhen. Klassische Bildbearbeitungstechniken finden sich in Lehrbüchern wie beispielsweise "Digital Image Processing - An Algorithmic Introduction using Java" von W. Burger und M. J. Burge, Springer-Verlag, 2016, ISBN: 9781447166849, 1447166841.

Erfindungsgemäß wird mindestens eine Transformation mit Hilfe eines Modells des maschinellen Lernens durchgeführt.

Ein solches Modell kann in einem überwachten Lernverfahren trainiert werden, aus einer oder mehreren Bildaufnahmen eine transformierte Bildaufnahme zu erzeugen.

Ein "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingangsdaten und Modell-Parametern liefern. Das Modell kann durch Training eine Beziehung zwischen den Eingabedaten und den Ausgabedaten erlernen. Beim Training können die Modell-Parameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten (sogenannte *Ground Truth* Daten) verglichen. Modell-Parameter werden so verändert, dass die Abweichungen zwischen den Ausgabedaten und den Zieldaten auf ein (definiertes) Minimum reduziert werden.

Im Training kann eine Fehlerfunktion (engl.: *loss function*) verwendet werden, um die Vorhersagequalität des Modells zu bewerten. Die Fehlerfunktion kann so gewählt werden, dass sie eine erwünschte Beziehung zwischen Ausgabedaten und Zieldaten belohnt und/oder eine unerwünschte Beziehung zwischen Ausgabedaten und Zieldaten bestraft. Eine solche Beziehung kann z.B. eine Ähnlichkeit, eine Unähnlichkeit oder eine andere Beziehung sein.

Eine Fehlerfunktion kann verwendet werden, um einen Fehler (engl.: *loss*) für ein gegebenes Paar aus Ausgabedaten und Zieldaten zu berechnen. Das Ziel des Trainingsprozesses kann darin bestehen, die Parameter des maschinellen Lernmodells so zu verändern (anzupassen), dass der Fehler für alle Paare des Trainingsdatensatzes auf ein (definiertes) Minimum reduziert wird.

Eine Fehlerfunktion kann z.B. die Abweichung zwischen den Ausgabedaten des Modells für bestimmte Eingabedaten und den Zieldaten quantifizieren. Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Wert der Fehlerfunktion bedeuten, dass ein oder mehrere Modell-Parameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder jede andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z. B. eine elementweise Differenzmetrik verwendet werden. Alternativ oder zusätzlich können die Ausgabedaten vor der Berechnung eines Verlustwertes transformiert werden, z.B. in einen eindimensionalen Vektor.

Im vorliegenden Fall kann das Modell des maschinellen Lernens trainiert werden, aus einer oder mehreren Bildaufnahmen eine transformierte Bildaufnahme zu erzeugen. Das Training kann auf Basis von Trainingsdaten erfolgen. Die Trainingsdaten können eine Vielzahl von Referenz-Bildaufnahmen und transformierten Referenz-Bildaufnahmen umfassen. Der Begriff "Vielzahl" bedeutet vorzugsweise mehr als 100. Der Begriff "Referenz-Bildaufnahme" dient lediglich der Unterscheidung von Bildaufnahmen, die zum Trainieren eines Modells des maschinellen Lernens verwendet werden, von Bildaufnahmen, die bei der Verwendung des trainierten Modells des maschinellen Lernens verwendet werden, um die Bildaufnahmen im Hinblick auf eine störungsfreie Dekodierung zu optimieren.

Jede Referenz-Bildaufnahme kann einen optisch lesbaren Code zeigen, der in eine Oberfläche eines Referenz-Gegenstandes eingebracht ist. Eine oder mehrere Referenz-Bildaufnahmen dienen als ein Satz an Eingabedaten für das Modell des maschinellen Lernens. Für jeden Satz an Eingabedaten gibt es eine transformierte Referenz-Bildaufnahme als Zieldaten. Die transformierte Referenz-Bildaufnahme zeigt denselben optisch lesbaren Code wie die eine oder die mehreren Referenz-Bildaufnahmen des Eingabedatensatzes. Transformierte Referenz-Bildaufnahmen können von einem oder mehreren Experten im Bereich der optischen Bildbearbeitung auf Basis der Referenz-Bildaufnahmen erzeugt worden sein. Der eine oder die mehreren Experten können eine oder mehrere Transformationen auf die Referenz-Bildaufnahmen anwenden, um transformierte Referenz-Bildaufnahmen mit weniger Störungen zu erzeugen. Die transformierten Referenz-Bildaufnahmen können die optisch lesbaren Codes beispielsweise deutlicher und/oder klarer und/oder mit mehr Kontrast und/oder mit weniger Verzerrungen und/oder mit weniger Verzeichnungen und/oder mit weniger Reflexionen und/oder mit weniger Eigenarten, die zu Dekodierfehlern führen können, erscheinen lassen als im Fall der nicht-transformierten Referenz-Bildaufnahmen. Der eine oder die mehreren Experten können mehrere Referenz-Bildaufnahmen, die denselben optisch lesbaren Code auf der Oberfläche desselben Gegenstands zeigen, miteinander kombinieren, um eine transformierte Referenz-Bildaufnahme zu erzeugen. Ziel der Transformationen und Kombinationen ist es, transformierte Referenz-Bildaufnahmen zu erzeugen, die beim Auslesen der abgebildeten optischen Codes weniger Dekodierfehler erzeugen als die nicht-transformierten Referenz-Bildaufnahmen.

Der Dekodierfehler kann empirisch ermittelt werden. Er kann zum Beispiel der prozentuale Anteil von Codes, die nicht (korrekt) dekodiert werden konnten, sein. Wenn also beispielsweise von 100 Codes, die in 100 Referenz-Bildaufnahmen abgebildet sind, 10 nicht dekodiert werden konnten oder einen oder mehrere Lesefehler erzeugt haben, dann beträgt der prozentuale Anteil von Codes, die nicht korrekt dekodiert werden konnten, 10%. Von den 100 Referenz-Bildaufnahmen werden z.B. 100 transformierte Referenz-Bildaufnahmen von einem oder mehreren Experten der Bildbearbeitung erzeugt. Die in den transformierten Referenz-Bildaufnahmen abgebildeten Codes werden dekodiert. Wenn die Experten ihre Arbeit korrekt ausgeführt haben, sollten von den 100 Codes in den 100 transformierten Referenz-Bildaufnahmen mehr als 90, idealerweise alle 100 korrekt dekodiert werden.

Viele optisch lesbare Codes weisen Mittel zur Fehlerkorrektur auf. Der Dekodierfehler kann auch die Anzahl an korrigierten Bits in einem Code bedeuten.

Ein oder mehrere Experten der Bildbearbeitung können für die einzelnen Referenz-Bildaufnahmen Transformationen festlegen, die zu einer Kontrasterhöhung des optisch lesbaren Codes gegenüber seiner Umgebung führen und/oder die zu einer Reduktion/Eliminierung von Verzerrungen/Verzeichnungen führen und/oder die Reflexionen reduzieren/eliminieren und/oder die anderen Eigenarten, die zu Dekodierfehlern führen können, reduzieren/eliminieren. Die Transformationen können jeweils getestet werden; falls sie nicht zu dem gewünschten Erfolg führen, können sie verworfen, verfeinert, geändert und/oder durch weitere Transformationen erweitert werden.

Beispiele für Transformationen sind: räumliche Tiefpassfilterung, räumliche Hochpassfilterung, Schärfen, Weichzeichnen (z.B. Gauß'sches Weichzeichnen), Unscharfmaskierung, Erosion, Medianfilter, Maximumfilter, Reduktion des Kontrastumfangs, Kantendetektion, Farbtiefe erniedrigen, Graustufenkonvertierung, Negativ erstellen, Farbkorrekturen (Farbbalance, Gammakorrektur, Sättigung), Farben-Ersetzung, Fourier-Transformation, Fourier-Tiefpassfilter, Fourier-Hochpassfilter, inverse Fourier-Transformation.

Einige Transformationen können durch Faltung einer als Rastergrafik vorliegenden Bildaufnahme mit einer oder mit mehreren Faltungsmatrizen (engl.: *convolution kernel*) durchgeführt werden. Dabei handelt es sich üblicherweise um quadratische Matrizen ungerader Abmessungen, die unterschiedliche Größen aufweisen können (zum Beispiel 3x3, 5x5, 9x9 und/oder dergleichen). Einige Transformationen können als lineares System dargestellt werden, wobei eine diskrete Faltung, eine lineare Operation, angewandt wird. Für diskrete zweidimensionale Funktionen (digitale Bilder) ergibt sich folgende Berechnungsformel für die diskrete Faltung:

$$I^*(x,y) = \sum_{i=1}^{n} \sum_{j=1}^{n} I(x-i+a, y-1+a)(k(i,j)$$

wobei $I^*(x, y)$ die Ergebnispixel der transformierten Bildaufnahme darstellen und $I$ die ursprüngliche Bildaufnahme, auf die die Transformation angewandt wird, ist. $a$ gibt die Koordinate des Mittelpunkts in der quadratischen Faltungsmatrix an und $k(i,j)$ ist ein Element der Faltungsmatrix. Bei 3x3-Faltungsmatrizen ist n=3 und a=2; bei 5x5-Matrizen ist $n=5$ und $a=3$.

Nachfolgend sind Transformationen und Sequenzen von Transformationen aufgeführt, die beispielsweise bei Äpfeln dazu führen, dass die transformierte Referenz-Bildaufnahme weniger Dekodierfehler erzeugt als die nicht-transformierte Referenz-Bildaufnahme:

- Farbtransformation in intensitätslineare RGB-Signale
- Farbtransformation der linearen RGB-Signale in z.B. einen Reflexkanal und/oder einen Beleuchtungskanal und mindestens zwei Farbkanäle zur Unterscheidung der codierten und uncodierten Oberflächenteile. Dazu werden die intensitätslinearen RGB-Farbsignale untereinander so linear kombiniert, dass eine bestmögliche Unterscheidung zwischen codierten und uncodierten Flächenteilen vorgenommen wird.
- Reflexkorrektur durch Subtraktion des Reflexkanals von den mindestens zwei Farbkanälen (additive Korrektur)
- Beleuchtungskorrektur durch Normierung der mindestens zwei Farbkanäle auf den Beleuchtungskanal (multiplikative Korrektur)
- Korrektur von Störungen in der Apfeloberfläche durch Detektion der Störungen und räumlicher Interpolation aus der Umgebung der Störstelle
- Unscharfmaskierung des beleuchtungs- und reflexkorrigierten Bildausschnitts mit einer Filtermaske in einer Ausdehnung, so dass räumliche Inhomogenitäten z.B. der Bildhelligkeit durch die gekrümmte Oberflächengestalt des Apfels gut ausgeglichen werden, und durch Anhebung der hochfrequenten Bildanteile der Bildkontrast zwischen codierten und uncodierten Flächenteilen verstärkt und optimiert wird.

Weitere Beispiele für Transformationen sind den zahlreichen Publikationen zum Thema digitale Bildbearbeitung zu entnehmen.

Ist eine Vielzahl von transformierten Referenz-Bildaufnahmen mit weniger Störungen als die ursprünglichen (nicht-transformierten) Referenz-Bildaufnahmen erzeugt, können die Trainingsdaten zum Trainieren des Modells des maschinellen Lernens verwendet werden. Dabei werden dem Modell die (nicht-transformierten) Referenz-Bildaufnahmen als Eingabedaten zugeführt. Das Modell ist konfiguriert, aus einer oder mehreren Referenz-Bildaufnahmen (als Eingabedatensatz) eine Ausgabebildaufnahme zu erzeugen. Die Ausgabebildaufnahme wird mit einer transformierten Referenz-Bildaufnahme (den Zieldaten) verglichen. Die Abweichungen zwischen der Ausgabebildaufnahme und der transformierten Referenz-Bildaufnahme können mit einer Fehlerfunktion quantifiziert werden.

Die ermittelten Fehler können verwendet werden, um Modellparameter des Modells des maschinellen Lernens so anzupassen, dass die Fehler reduziert werden. Erreichen die Fehler ein vor-definiertes Minimum, ist das Modell trainiert und kann zur Erzeugung von neuen transformierten Bildaufnahmen auf Basis von neuen Bildaufnahmen verwendet werden. Dabei bedeutet der Begriff "neu", dass die entsprechenden Bildaufnahmen nicht beim Trainieren des Modells verwendet wurden.

Das Modell des maschinellen Lernens kann beispielsweise ein künstliches neuronales Netzwerk sein oder ein solches umfassen.

Ein künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen einer oder mehreren Bildaufnahmen. Die Ausgangsneuronen dienen dazu, transformierte Bildaufnahmen auszugeben.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabedaten auf gegebene Ausgabedaten angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte.

Im trainierten Zustand enthalten die Verbindungsgewichte zwischen den Verarbeitungselementen Informationen bezüglich der Beziehung zwischen Bildaufnahmen und transformierten Bildaufnahmen.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um zu überprüfen, mit welcher Vorhersagegenauigkeit sich das trainierte Netzwerk auf unbekannte Daten anwenden lässt.

In einer besonders bevorzugten Ausführungsform umfasst das Modell des maschinellen Lernens ein generatives, gegnerisches Netzwerk (engl.: *generative adversarial network,* Abkürzung: GAN). Details zu diesen und anderen künstlichen neuronalen Netzen können dem Stand der Technik entnommen werden (siehe z.B.: M.-Y. Liu *et al.: Generative Adversarial Networks for Image and Video Synthesis: Algorithms and Applications,* arXiv:2008.02793; J. Henry et al.: Pix2Pix GAN for Image-to-Image Translation, DOI: 10.13140/RG.2.2.32286.66887).

Ist das Modell des maschinellen Lernens trainiert, kann es zur Erzeugung von neuen transformierten Bildaufnahmen auf Basis von neuen Bildaufnahmen verwendet werden.

Die neue Bildaufnahme (oder mehrere neue Bildaufnahmen) werden dem trainierten Modell zugeführt und das Modell erzeugt eine transformierte Bildaufnahme.

In der transformierten Bildaufnahme ist der optisch lesbare Code besser erkennbar und auslesbar als in der ursprünglichen (nicht-transformierten) Bildaufnahme (oder den ursprünglichen Bildaufnahmen im Fall von mehreren Bildaufnahmen), d.h. die Wahrscheinlichkeit für das Auftreten eines Dekodierfehlers ist reduziert.

Es ist denkbar, dass ein Modell des maschinellen Lernens trainiert wird, eine definierte Aufgabe zu erfüllen, wie beispielsweise eine Kontrastoptimierung, eine Verzeichniskorrektur, eine Reduzierung oder Eliminierung von Lichtreflexionen und/oder dergleichen. Es ist denkbar, dass mehrere Modelle des maschinellen Lernens vorliegen, die unabhängig voneinander trainiert worden sind, eine definierte Aufgabe zu erfüllen. Es ist denkbar, dass die unabhängig voneinander trainierten Modelle des maschinellen Lernens miteinander kombiniert werden, um nacheinander mehrere definierte Aufgaben zu erfüllen. Dabei können die Modelle des maschinellen Lernens beispielsweise in Reihe geschaltet werden, so dass die transformierte Bildaufnahme eines Modells des maschinellen Lernens dem in der Reihe unmittelbar folgenden Modells des maschinellen Lernens als Eingabe dient. Vorzugsweise erfolgt auch das Training der Modelle so, dass die von einem Modell erzeugte transformierte Bildaufnahme als Eingabe des in der Reihe unmittelbar folgenden Modells dient.

Es ist aber auch denkbar, dass ein Modell des maschinellen Lernens trainiert wird, mehrere definierte Aufgaben (z.B. simultan) zu erfüllen.

Wie beschrieben, werden mehrere Transformationen der empfangenen Bildaufnahme durchgeführt, wobei mindestens eine Transformation mit Hilfe eines trainierten Modells des maschinellen Lernens durchgeführt wird.

Es ist denkbar, dass Transformationen auf Basis klassischer Bildbearbeitungstechniken und Transformationen unter Nutzung eines Modells des maschinellen Lernens miteinander kombiniert werden. Dabei können in einem ersten Schritt eine oder mehrere Transformationen auf Basis klassischer Bildbearbeitungstechniken gefolgt von einer oder mehreren Transformationen unter Nutzung eines oder mehrerer Modelle des maschinellen Lernens erfolgen. Denkbar ist auch, dass in einem ersten Schritt eine oder mehrere Transformationen unter Nutzung eines oder mehrerer Modelle des maschinellen Lernens gefolgt von einer oder mehreren Transformationen auf Basis klassischer Bildbearbeitungstechniken erfolgen. Auch die abwechselnde Nutzung von Methoden der klassischen Bildbearbeitung und der Nutzung eines oder mehrere Modelle des maschinellen Lernens ist denkbar.

In einer bevorzugten Ausführungsform werden in einem ersten Schritt auf Basis der mindestens einen Bildaufnahme ein oder mehrere Transformationsparameter identifiziert. Der eine oder die mehreren Transformationsparameter legen dann fest, welche Transformation(en) durchgeführt werden, und bei mehreren Transformationen, in welcher Reihenfolge sie durchgeführt werden.

Die Ermittlung der Transformationsparameter kann in zwei Schritten erfolgen: in einem ersten Schritt kann derjenige Gegenstand identifiziert werden, der (zumindest anteilig) in der ersten Bildaufnahme abgebildet ist; in einem zweiten Schritt können dann diejenigen Transformationen, die durchgeführt werden sollen, und ggf. die Reihenfolge der Transformationen, aus einem Datenspeicher ausgelesen werden.

Die Identifizierung des Gegenstands kann beispielsweise anhand von charakteristischen Eigenschaften des Gegenstands, die in der ersten Bildaufnahme abgebildet sind, erfolgen. Solche charakteristischen Eigenschaften sind beispielsweise die Farbe und/oder die Farbverteilung, die Form, die Größe, die Textur und/oder andere/weitere. Mustererkennungsverfahren, wie sie dem Fachmann der Bildbearbeitung bekannt sind, können verwendet werden, um den Gegenstand anhand von abgebildeten charakteristischen Merkmalen zu identifizieren.

Vorzugsweise wird für die Identifizierung des Gegenstands ein trainiertes Modell des maschinellen Lernens verwendet. Ein solches Modell zu Identifizierung des Gegenstands wird in dieser Beschreibung auch als Erkennungsmodell bezeichnet.

Ein solches Modell kann in einem überwachten Lernverfahren trainiert werden, auf Basis der mindestens einen Bildaufnahme eine Information auszugeben, die angibt, um welchen Gegenstand es sich in der mindestens einen Bildaufnahme handelt.

Das Modell des maschinellen Lernens kann als ein Klassifikationsmodell ausgestaltet (konfiguriert) sein, das mindestens eine Bildaufnahme als Eingabedaten einem spezifischen Gegenstand als Ausgabedaten zuordnet. Das Modell kann beispielsweise eine Zahl ausgeben, die den spezifischen Gegenstand, der in der Bildaufnahme abgebildet ist, repräsentiert.

Solche Klassifikationsmodelle sind im Stand der Technik beschrieben (siehe z.B. F. Sultana *et al.: Advancements in Image Classification using Convolutional Neural Network,* arXiv:1905.03288v1 [cs.CV], 2019; A. Khan *et al.: A Survey of the Recent Architectures of Deep Convolutional Neural Networks, Artificial Intelligence Review,* DOI: https://doi.org/10.1007/s10462-020-09825-6).

Die Zuordnung der mindestens einen Bildaufnahme zu demjenigen Gegenstand, der in der ersten Bildaufnahme abgebildet ist, wird in dieser Beschreibung auch als "Identifizieren des Gegenstands" bezeichnet. Dabei kann die mindestens eine Bildaufnahme dem jeweiligen Gegenstand zugeordnet werden und/oder dem jeweiligen Teil eines Gegenstands, der/das in der mindestens einen Bildaufnahme abgebildet ist. Bei pflanzlichen Erzeugnissen kann die mindestens eine Bildaufnahme auch einem Reifegrad und/oder einem visuellen Erscheinungsbild zugeordnet werden; im Fall von Bananen beispielsweise einer grünen oder gelben Banane; im Fall von Paprika beispielsweise einer grünen, gelben oder roten Paprika, im Fall eines Apfels der jeweils vorliegenden Apfelsorte und/oder dergleichen.

Das Identifizieren des Gegenstands in der mindestens einen Bildaufnahme dient der Ermittlung von Transformationsparametern. Die Transformationsparameter geben an, welche Transformationen, und, bei mehreren Transformationen, in welcher Reihenfolge die Transformationen durchgeführt werden.

Die Transformationsparameter können in einem Datenspeicher, beispielsweise in einer relationalen Datenbank gespeichert sein. Das Modell des maschinellen Lernens kann konfiguriert und trainiert sein, auf Basis der mindestens einen Bildaufnahme eine Kennung auszugeben, die in der Datenbank mit den Transformationsparametern verknüpft ist. Mit anderen Worten: anhand einer Kennung, die den in der mindestens einen Bildaufnahme abgebildeten Gegenstand repräsentiert, können Transformationsparameter, die der Kennung zugeordnet sind, aus einer Datenbank ermittelt und ausgelesen werden.

Es ist auch denkbar, dass das Modell des maschinellen Lernens trainiert wird, die Transformationsparameter selbst zu liefern / auszugeben.

In einer weiteren bevorzugten Ausführungsform werden der eine oder die mehreren Transformationsparameter auf Basis von Störfaktoren und/oder Störungen ermittelt. In einem ersten Schritt können in der mindestens einen Bildaufnahme ein oder mehrere Störfaktoren und/oder Störungen identifiziert werden. In einem zweiten Schritt können dann ein oder mehrere Transformationen ausgewählt werden, die Störungen infolge der Störfaktoren in der mindestens einen Bildaufnahme reduzieren und/oder eliminieren.

Es ist zum Beispiel denkbar, dass in einem ersten Schritt analysiert wird, ob der in der mindestens einen Bildaufnahme abgebildete Gegenstand eine Krümmung aufweist, ob er z.B. rund ist. Wird eine Krümmung (z.B. eine runde Form) identifiziert, so ist dies ein Indiz dafür, dass Verzeichnungen bei dem abgebildeten optisch lesbaren Code auftreten können. In einem solchen Fall kann eine Transformation ausgewählt werden, die zu einer Verzeichniskorrektur führt. Werden ein oder mehrere Lichtreflexe in der mindestens einen Bildaufnahme identifiziert, kann eine Transformation ausgewählt werden, die diese Lichtreflexe reduziert oder eliminiert. Wird ein geringer Kontrast zwischen dem in eine Oberfläche des Gegenstands eingebrachten optisch lesbaren Code und seiner Umgebung identifiziert, oder die Oberfläche des Gegenstands weist generell eine dunkle Farbe auf, so kann eine Transformation ausgewählt werden, die zu einer Kontrasterhöhung des optisch lesbaren Codes gegenüber seiner Umgebung führt. Zur Erkennung einer "dunklen Farbe" können beispielsweise die Tonwerte der Bildelemente, die den Gegenstand repräsentieren, mit einem oder mehreren Referenzwerten verglichen werden.

Die Auswahl einer Transformation kann bedeuten, dass eine klassische Bildbearbeitungsmethode ausgewählt wird, um die Störungen aus der mindestens einen Bildaufnahme zu reduzieren und/oder entfernen. Die Auswahl einer Transformation kann aber auch bedeuten, dass ein Modell des maschinellen Lernens ausgewählt wird, das trainiert worden ist, die Störungen aus der mindestens einen Bildaufnahme zu reduzieren und/oder entfernen.

Ist auf Basis der mindestens einen Bildaufnahme eine transformierte Bildaufnahme erzeugt worden, kann in einem nächsten Schritt der in der transformierten Bildaufnahme abgebildete Code ausgelesen (dekodiert) werden. Je nach verwendetem Code gibt es hier bereits existierende Verfahren zum Auslesen (Dekodieren) des jeweiligen Codes (siehe z.B.: https://www.gs1.org/docs/barcodes/ GS1 DataMatrix Guideline.pdf).

Der ausgelesene (dekodierte) Code kann Informationen zu dem Gegenstand, in dessen Oberfläche der Code eingebracht ist, enthalten.

In einer bevorzugten Ausführungsform umfasst der ausgelesene Code eine (individuelle) Kennung, anhand der ein Verbraucher weitere Informationen zu dem Gegenstand zum Beispiel aus einer Datenbank erhalten kann. Der ausgelesene Code und/oder mit dem ausgelesenen Code verknüpfte Informationen können ausgegeben, d.h. auf einem Bildschirm angezeigt, auf einem Drucker ausgedruckt und/oder in einem Datenspeicher gespeichert werden.

Weitere Informationen zu einer solchen (individuellen) Kennung und den Informationen, die zu dem mit der Kennung verknüpften Gegenstand gespeichert sein und einem Verbraucher angezeigt werden können sind in der Patentanmeldung EP3896629A1 beschrieben.

Die Erfindung wird nachfolgend anhand von Zeichnungen näher erläutert, ohne die Erfindung auf die in den Zeichnungen gezeigten Merkmale und Merkmalskombinationen beschränken zu wollen. Aussagen, die in Bezug auf eine Zeichnung und/oder ein Merkmal in einer Zeichnung getroffen werden, sind nicht auf die jeweilige Zeichnung beschränkt, sondern sollen allgemein gelten.

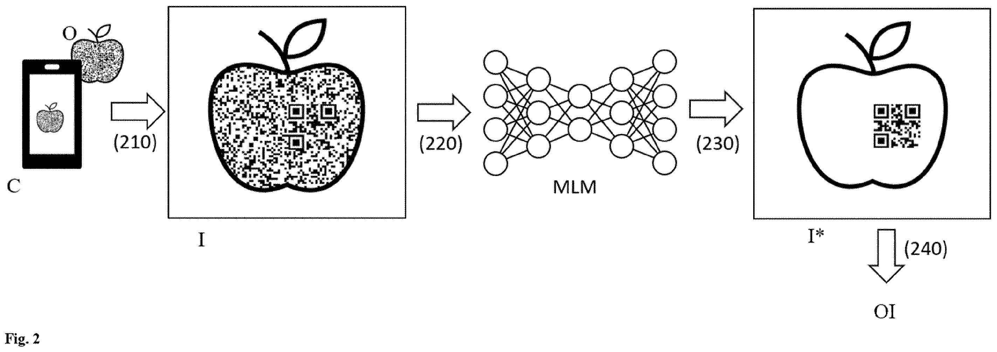

Fig. 2 zeigt schematisch und beispielhaft in Form eines Ablaufschemas das Auslesen eines optisch lesbaren Codes, der in eine Oberfläche eines Gegenstands eingebracht ist.

In einem ersten Schritt (210) wird mit Hilfe einer Kamera C eine digitale Bildaufnahme I des Gegenstands O erzeugt. In einem zweiten Schritt (220) wird die digitale Bildaufnahme I einem Modell des maschinellen Lernens MLM zugeführt. Das Modell des maschinellen Lernens MLM ist konfiguriert und trainiert, auf Basis der Bildaufnahme I eine transformierte Bildaufnahme I* zu erzeugen. In einem dritten Schritt (230) liefert das Modell des maschinellen Lernens MLM die transformierte Bildaufnahme I*, in der ein optisch lesbarer Code (in diesem Fall ein QR-Code), der in eine Oberfläche des Gegenstands O eingebracht ist, einen höheren Kontrast gegenüber seiner Umgebung aufweist und damit deutlicher erkennbar und leichter auszulesen ist als der Code im Fall der nicht-transformierten Bildaufnahme I. In einem vierten Schritt (240) wird der optisch lesbare Code ausgelesen und der ausgelesene Code OI bereitgestellt. Der ausgelesene Code OI kann angezeigt werden und/oder es können Informationen zu dem Gegenstand O anhand des ausgelesenen Codes OI z.B. aus einer Datenbank ausgelesen und bereitgestellt (z.B. übermittelt und angezeigt) werden.

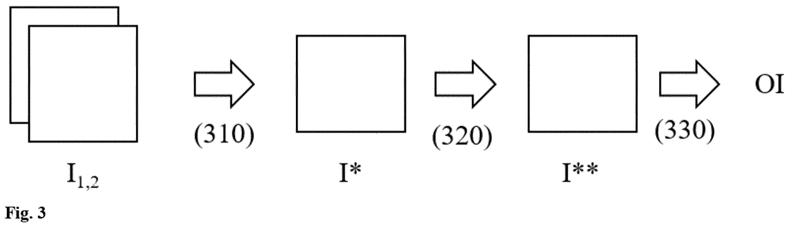

Fig. 3 zeigt schematisch und beispielhaft in Form eines Ablaufschemas das Erzeugen einer transformierten Bildaufnahme und das Auslesen eines optisch lesbaren Codes, der in der transformierten Bildaufnahme abgebildet ist. Ausgangspunkt ist mindestens eine Bildaufnahme eines Gegenstands, in dessen Oberfläche ein optisch lesbarer Code eingebracht ist. Im vorliegenden Beispiel liegen zwei Bildaufnahmen $I_1$ und $I_2$ vor; es können aber auch mehr oder weniger sein. Es ist denkbar, dass die Bildaufnahmen $I_{1,2}$ aus unterschiedlichen Blickrichtungen erzeugt worden sind, oder, dass im Fall einer Bildaufnahme ein optischer Filter verwendet worden ist (z.B. ein Polarisationsfilter oder ein Farbfilter) und im Fall der anderen Bildaufnahme kein Filter oder ein anderer Filter verwendet worden ist. Die Bildaufnahmen $I_{1,2}$ werden in Schritt (310) einer ersten Transformation unterzogen. Im vorliegenden Beispiel erzeugt die Transformation aus den beiden Bildaufnahmen $I_{1,2}$ eine erste transformierte Bildaufnahme I*. Die transformierte Bildaufnahme I* wird in Schritt (320) einer zweiten Transformation unterzogen. Die zweite Transformation erzeugt aus der ersten transformierten Bildaufnahme eine zweite transformierte Bildaufnahme I**. Die zweite transformierte Bildaufnahme I** wird in Schritt (330) einer Dekodierung unterzogen, die den in der zweiten transformierten Bildaufnahme abgebildeten optisch lesbaren Code dekodiert. Das Ergebnis der Dekodierung ist ein ausgelesener Code OI. Erfindungsgemäß wird mindestens eine Transformation mit Hilfe eines Modells des maschinellen Lernens durchgeführt. Im vorliegenden Beispiel kann beispielsweise die erste Transformation eine Verzeichnungskorrektur und/oder Reduktion von Lichtreflexen mit Hilfe klassischer Bildbearbeitungsverfahren und die zweite Transformation eine Kontrastoptimierung mit Hilfe eines Modells des maschinellen Lernens sein. Es ist aber auch möglich, dass die erste Transformation eine Transformation ist, die mit Hilfe eines Modells des maschinellen Lernens durchgeführt wird, und die zweite Transformation eine Transformation entweder mittels eines weiteren Modells des maschinellen Lernens oder mit Hilfe klassischer Bildbearbeitungsverfahren.

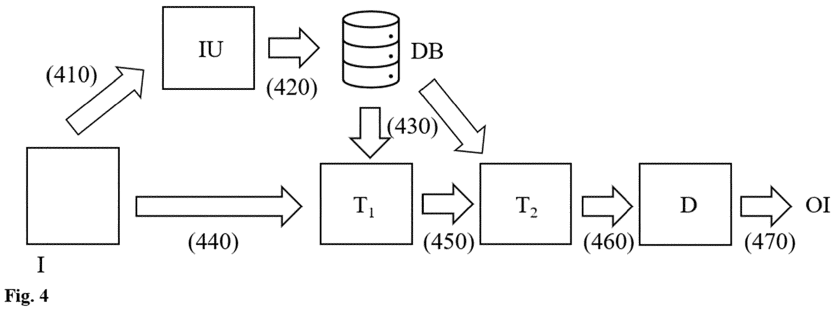

Fig. 4 zeigt schematisch in Form eines Ablaufschemas ein weiteres Beispiel für das Optimieren mindestens einer Bildaufnahme im Hinblick auf ein fehlerfreies Auslesen eines optisch lesbaren Codes.

Ausgangspunkt ist mindestens eine Bildaufnahme I eines Gegenstands, in dessen Oberfläche ein optisch lesbarer Code eingebracht ist. Die mindestens eine Bildaufnahme I wird in Schritt (410) einer Identifikationseinheit IU zugeführt. Bei der Identifikationseinheit IU kann es sich um eine Erkennungseinheit handeln, die konfiguriert ist, den in der mindestens einen Bildaufnahme I abgebildeten Gegenstand zu identifizieren. Die Identifizierung des Gegenstands kann beispielsweise mit Hilfe eines Modells des maschinellen Lernens erfolgen (mit einem Erkennungsmodell), das konfiguriert und trainiert ist, die mindestens eine Bildaufnahme dem in der mindestens einen Bildaufnahme abgebildeten Gegenstand zuzuordnen. Bei der Identifikationseinheit IU kann es sich aber auch um eine Einheit handeln, die konfiguriert ist, eine oder mehrere Störungen und/oder Störfaktoren in der mindestens einen Bildaufnahme zu erkennen. Anhand des Ergebnisses der Analyse der Identifikationseinheit können Transformationsparameter ermittelt werden. Diese Transformationsparameter legen fest, welche Transformation(en) durchgeführt werden, und bei mehreren Transformationen, in welcher Reihenfolge sie durchgeführt werden. Die Transformationsparameter sind im vorliegenden Beispiel in einem Datenspeicher DB gespeichert. Die Identifikationseinheit IU kann also beispielsweise eine Kennung ausgeben (Schritt (420)), die den in der Bildaufnahme abgebildeten Gegenstand kennzeichnet, oder sie kann eine Kennung ausgeben (Schritt (420)), die eine oder mehrere Störungen und/oder einen oder mehrere Störfaktoren kennzeichnen. Anhand der Kennung können dann die Transformationsparameter aus dem Datenspeicher ermittelt werden (Schritt (430)). Im vorliegenden Beispiel ergeben sich zwei Transformationen $T_1$ und $T_2$. Die mindestens eine Bildaufnahme I wird in Schritt (440) der ersten Transformation $T_1$ zugeführt. Bei der mindestens einen Bildaufnahme I, die in Schritt (440) der ersten Transformation $T_1$ zugeführt wird, muss es sich nicht zwangsläufig um dieselbe mindestens eine Bildaufnahme handeln, die der Identifikationseinheit IU zugeführt wurde. Es ist denkbar, dass die mindestens eine Bildaufnahme I zwei Bildaufnahmen umfasst, eine erste Bildaufnahme und eine zweite Bildaufnahme, die beide denselben Gegenstand zeigen, aber beispielsweise zu unterschiedlichen Zeitpunkten. Die erste Bildaufnahme kann der Identifikationseinheit IU zugeführt werden, um Transformationsparameter zu ermitteln und die zweite Bildaufnahme kann der ersten Transformation $T_1$ zugeführt werden. Es ist beispielsweise denkbar, dass die Kamera, mit der die mindestens eine Bildaufnahme erzeugt wird, konfiguriert ist, kontinuierlich mit einer definierten Rate Abbildungen, die auf dem Bildsensor der Kamera fallen, zu digitalisieren, digitale Bildaufnahmen zu erzeugen, und diese digitalen Bildaufnahmen einer Identifikationseinheit zuzuführen. Die Identifikationseinheit kann eine Kennung an eine Steuereinheit übermitteln, die anhand der Kennung Transformationsparameter ermittelt. Die ermittelten Transformationsparameter geben Auskunft über die Transformation(en) (und ggf. die Reihenfolge von Transformationen), die dann auf eines oder mehrere der nachfolgend erzeugten Bildaufnahmen angewandt werden. Das Ergebnis der Transformation $T_1$ der mindestens einen Bildaufnahme I ist eine erste transformierte Bildaufnahme, die der zweiten Transformation $T_2$ zugeführt wird (Schritt (450)). Das Ergebnis der zweiten Transformation $T_2$ ist eine zweite transformierte Bildaufnahme, die einem Dekodierer D zugeführt wird (Schritt (460)). Der Dekodierer D ist konfiguriert, den in der zweiten transformierten Bildaufnahme abgebildeten optisch lesbaren Code zu dekodieren. Der Dekodierer D gibt in Schritt (470) den dekodierten Code OI aus.

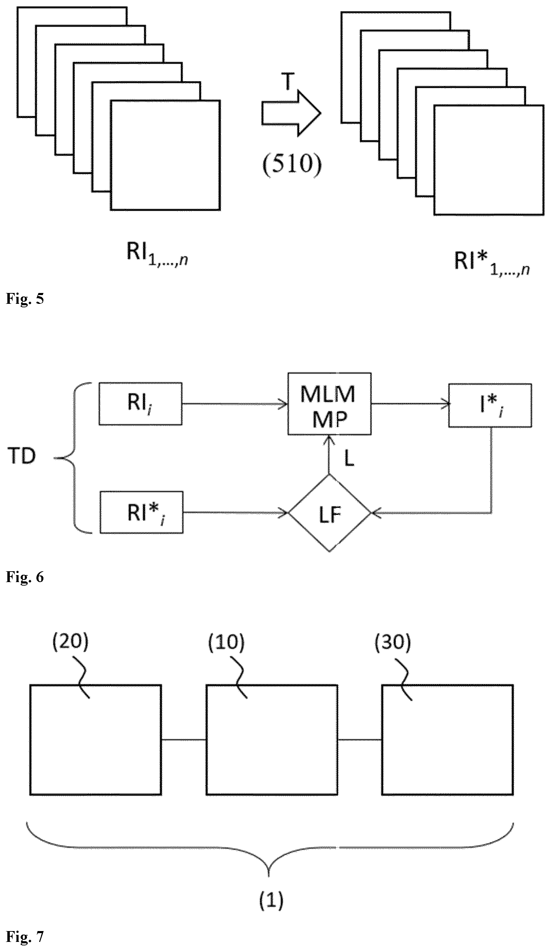

Fig. 5 zeigt beispielhaft und schematisch das Erzeugen eines Trainingsdatensatzes zum Trainieren eines Modells des maschinellen Lernens. Anhand des Trainingsdatensatzes wird das Modell des maschinellen Lernens trainiert, eine oder mehrere Transformationen von Bildaufnahmen durchzuführen. Das Training ist in Fig. 6 gezeigt.

Das Erzeugen eines Trainingsdatensatzes kann ein manueller Prozess sein, der von einem oder von mehreren Experten durchgeführt wird. Ausgangspunkt ist im vorliegenden Beispiel eine Zahl $n$ von Referenz-Bildaufnahmen $RI_1$ bis $RI_n$, wobei n eine ganze Zahl ist, die vorzugsweise größer als 100 ist. Jede Referenz-Bildaufnahme zeigt einen optischen Code, der in eine Oberfläche eines Gegenstands eingebracht ist. Vorzugsweise zeigt jede Referenz-Bildaufnahme einen optisch lesbaren Code, der in ein unterschiedliches Exemplar eines Gegenstands eingebracht ist. Bei dem Gegenstand kann es sich beispielsweise um einen Apfel handeln; in dem Fall zeigt jede Referenz-Bildaufnahme vorzugsweise einen optisch lesbaren Code in verschiedenen Apfel-Exemplaren.

Ist es stets der gleiche Referenz-Gegenstand wie z.B. ein Apfel, dann kann der Trainingsdatensatz dazu verwendet werden, ein Modell des maschinellen Lernens zu trainieren, Störungen in Bildaufnahmen von optisch lesbaren Codes, die in Äpfeln eingebracht sind, zu reduzieren und/oder zu eliminieren.

Sind es verschiedene Referenz-Gegenstände wie beispielsweise verschiedene Früchte (z.B. Äpfel und Birnen), kann der Trainingsdatensatz dazu verwendet werden, ein Modell des maschinellen Lernens zu trainieren, Störungen in Bildaufnahmen von optisch lesbaren Codes, die in verschiedenen Früchten eingebracht sind, zu reduzieren und/oder zu eliminieren. Je verschiedener (variantenreicher) die Referenz-Gegenstände sind, die in den Referenz-Bildaufnahmen abgebildet sind, desto mehr Trainingsdaten sind erforderlich, und desto vielfältiger kann das trainierte Modell des maschinellen Lernens eingesetzt werden. Ein Modell des maschinellen Lernens, das nur auf Basis von Referenz-Bildaufnahmen von Äpfeln einer definierten Sorte trainiert worden ist, wird bei einer Nutzung zum Auslesen von Codes auf Bananen weniger gute Ergebnisse erzielen als ein Modell, das auf Basis von Referenz-Bildaufnahmen von Äpfeln verschiedener Sorten und von Bananen trainiert worden ist. Der optisch lesbare Code, der in den Referenz-Bildaufnahmen abgebildet ist, kann ebenso in allen Referenz-Bildaufnahmen gleich oder verschieden sein.

Im vorliegenden Beispiel (Fig. 5) wird von einem Experten aus jeweils einer Referenz-Bildaufnahme eine transformierte Referenzbildaufnahme erzeugt. Wie in dieser Beschreibung beschrieben, können auch mehrere Referenz-Bildaufnahmen zu einer transformierten Referenz-Bildaufnahme kombiniert werden. Eine transformierte Referenz-Bildaufnahme wird dadurch erzeugt, dass die Referenz-Bildaufnahme einer oder mehreren Transformationen unterzogen wird. Welche Transformation(en) durchgeführt wird/werden, und in welcher Reihenfolge die Transformationen bei mehreren Transformationen durchgeführt werden, wird von dem Experten auf Basis seines Fachwissens festgelegt. Ziel der Transformation(en) ist es, aus mindestens einer Referenz-Bildaufnahme eine transformierte Referenz-Bildaufnahme zu erzeugen, in der weniger Störungen vorhanden sind und damit die Wahrscheinlichkeit des Auftretens von Dekodierfehlern reduziert ist.

Fig. 6 zeigt schematisch und beispielhaft einen Schritt beim Trainieren eines Modells des maschinellen Lernens. Das Trainieren erfolgt auf Basis eines Trainingsdatensatzes. Der Trainingsdatensatz umfasst eine Vielzahl an Referenz-Bildaufnahmen und transformierten Referenz-Bildaufnahmen. Die Referenz-Bildaufnahmen und transformierten Referenz-Bildaufnahmen bilden Paare, d.h. zu jeder Referenz-Bildaufnahme gibt es eine transformierte Referenz-Bildaufnahme. Werden mehrere Referenz-Bildaufnahmen zu einer transformierten Referenz-Bildaufnahme kombiniert, gibt es Tupel, wobei jedes Tupel eine transformierte Referenz-Bildaufnahme und eine Zahl an Referenz-Aufnahmen, die zur Erzeugung der transformierten Referenz-Bildaufnahme verwendet wurden, umfasst. Im vorliegenden Beispiel liegen zur Vereinfachung Paare vor.

Im vorliegenden Beispiel ist ein solches Paar bestehend aus einer Referenz-Bildaufnahme $RI_i$ und einer transformierten Referenz-Bildaufnahme $RI^*_i$ gezeigt. Die Referenz-Bildaufnahme $RI_i$ wird dem Modell des maschinellen Lernens MLM zugeführt. Das Modell des maschinellen Lernens MLM ist konfiguriert, eine transformierte Bildaufnahme $I^*_i$ zu erzeugen. Die transformierte Bildaufnahme $I^*_i$ wird mit der transformierten Referenz-Bildaufnahme $RI^*_i$ verglichen. Mit Hilfe einer Fehlerfunktion LF wird ein Fehler L errechnet, der die Abweichungen der transformierten Bildaufnahme $I^*_i$ von der transformierten Referenz-Bildaufnahme $RI^*_i$ quantifiziert. Der Fehler L kann z.B. in einem Backpropagationsverfahren verwendet werden, Modellparamater MP des Modells des maschinellen Lernens so zu verändern, dass der Fehler auf ein (definiertes) Minimum reduziert wird. Der beschriebene Vorgang wird für eine Vielzahl an Referenz-Bildaufnahmen und transformierten Referenz-Bildaufnahmen wiederholt, bis die erzielten Fehler auf ein (definiertes) Minimum reduziert sind. Ist das Modell des maschinellen Lernens trainiert, so kann es verwendet werden, transformierte Bildaufnahmen für neue Bildaufnahmen zu erzeugen, wobei der Begriff "neu" bedeutet, dass die entsprechenden Bildaufnahmen nicht bereits im Training verwendet worden sind.

Fig. 7 zeigt beispielhaft und schematisch ein erfindungsgemäßes System.

Das System (1) umfasst ein Computersystem (10), eine Kamera (20) und einen oder mehrere Datenspeicher (30). Mit Hilfe der Kamera (20) können Bildaufnahmen von Gegenständen erzeugt werden. Die Kamera (20) ist mit dem Computersystem (10) verbunden, so dass die erzeugten Bildaufnahmen auf das Computersystem (10) übertragen werden können. Die Kamera (20) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass die Kamera (20) ein integraler Bestandteil des Computersystems (10) ist, wie dies beispielsweise bei heutigen Smartphones und Tablet-Computern der Fall ist.

Das Computersystem (10) ist (beispielsweise mittels eines Computerprogramms) konfiguriert, eine oder mehrere Bildaufnahmen (von der Kamera oder aus einem Datenspeicher) zu empfangen, eine transformierte Bildaufnahme zu erzeugen, den optischen Code in der transformierten Bildaufnahme zu dekodieren und den dekodierten Code auszugeben und/oder Informationen bereitzustellen, die mit dem dekodierten Code verknüpft sind.

In dem Datenspeicher (30) können Bildaufnahmen, Modelle, Modellparameter, Computerprogramme, Transformationsparameter und/oder andere/weitere Informationen gespeichert sein. Der Datenspeicher (30) kann mit dem Computersystem (10) über eine Kabelverbindung und/oder über eine Funkverbindung verbunden sein. Auch eine Verbindung über ein oder mehrere Netzwerke ist denkbar. Denkbar ist ferner, dass der Datenspeicher (30) ein integraler Bestandteil des Computersystems (10) ist. Denkbar ist ferner, dass mehrere Datenspeicher vorhanden sind.

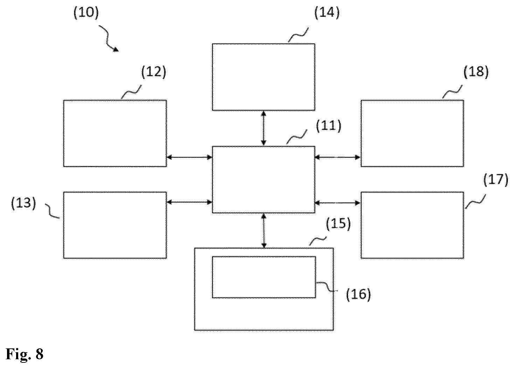

Fig. 8 zeigt schematisch ein Computersystem (10). Ein solches Computersystem (10) kann ein oder mehrere ortsfeste oder tragbare elektronische Geräte umfassen. Das Computersystem (10) kann eine oder mehrere Komponenten umfassen, wie z.B. eine Verarbeitungseinheit (11), die mit einem Speicher (15) verbunden ist.

Die Verarbeitungseinheit (11) (engl.: *processing unit*) kann einen oder mehrere Prozessoren allein oder in Kombination mit einem oder mehreren Speichern umfassen. Bei der Verarbeitungseinheit (11) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (11) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (11) kann konfiguriert sein, Computerprogramme auszuführen, die in einem Arbeitsspeicher der Verarbeitungseinheit (11) oder im Speicher (15) desselben oder eines anderen Computersystems gespeichert sein können.

Der Speicher (15) kann eine gewöhnliche Computerhardware sein, die in der Lage ist, Informationen wie z.B. digitale Bildaufnahmen, Daten, Computerprogramme und/oder andere digitale Informationen entweder vorübergehend und/oder dauerhaft zu speichern. Der Speicher (15) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-LeseSpeicher (CD-ROM), Compact Discs mit Lese-/Schreibfunktion (CD-R/W), DVDs, Blu-ray-Discs und ähnliche gehören.

Zusätzlich zum Speicher (15) kann die Verarbeitungseinheit (11) auch mit einer oder mehreren Schnittstellen (12, 13, 14, 17, 18) verbunden sein, um Informationen anzuzeigen, zu übertragen und/oder zu empfangen. Die Schnittstellen können eine oder mehrere Kommunikationsschnittstellen (17, 18) und/oder eine oder mehrere Benutzerschnittstellen (12, 13, 14) umfassen. Die eine oder mehrere Kommunikationsschnittstellen können so konfiguriert sein, dass sie Informationen senden und/oder empfangen, z.B. zu und/oder von einer Kamera, anderen Computern, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (12, 13, 14) können eine Anzeige (14) umfassen. Eine Anzeige (14) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (12, 13) kann/können verdrahtet oder drahtlos sein und kann/können so konfiguriert sein, dass sie Informationen von einem Benutzer in das Computersystem (10) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (16) können im Speicher (15) gespeichert sein und von der Verarbeitungseinheit (11) ausgeführt werden, die dadurch programmiert wird, die in dieser Beschreibung beschriebenen Funktionen zu erfüllen. Das Abrufen, Laden und Ausführen von Anweisungen des Computerprogramms (16) kann sequenziell erfolgen, so dass jeweils ein Befehl abgerufen, geladen und ausgeführt wird. Das Abrufen, Laden und/oder Ausführen kann aber auch parallel erfolgen.

Das erfindungsgemäße System kann als Laptop, Notebook, Netbook, Tablet-PC und/oder Handheld-Gerät (z.B. Smartphone) ausgeführt sein. Vorzugsweise umfasst das erfindungsgemäße System eine Kamera.

## Patentansprüche

1. Computer-implementiertes Verfahren umfassend die Schritte

   - Empfangen mindestens einer Bildaufnahme (I) von einem Gegenstand (O), wobei der Gegenstand (O) einen optisch lesbaren Code umfasst, wobei der optisch lesbare Code in eine Oberfläche des Gegenstands (O) eingebracht ist,
   - Identifizieren des Gegenstands (O) auf Basis der mindestens einen Bildaufnahme (I),
   - Auslesen von Transformationsparametern für den identifizierten Gegenstand (O) aus einer Datenbank,

- Durchführen einer oder mehrerer Transformationen ($T_1$, $T_2$) der mindestens einen Bildaufnahme (I) gemäß den Transformationsparametern und dabei Erzeugen einer transformierten Bildaufnahme (I*),

   ◦ wobei die Transformationsparameter festlegen, welche Transformation/Transformationen ($T_1$, $T_2$) durchgeführt werden, und bei mehreren Transformationen ($T_1$, $T_2$), in welcher Reihenfolge sie durchgeführt werden,
   ◦ wobei mindestens eine Transformation ($T_1$, $T_2$) mit Hilfe eines trainierten Modells (MLM) des maschinellen Lernens durchgeführt wird, wobei das Durchführen einer Transformation ($T_1$, $T_2$) mit Hilfe des trainierten Modells (MLM) des maschinellen Lernens umfasst:

      ▪ Zuführen der mindestens einen Bildaufnahme (I) dem trainierten Modell (MLM) des maschinellen Lernens,
      ▪ Empfangen einer transformierten Bildaufnahme (I*) von dem trainierten Modell (MLM) des maschinellen Lernens,

   ◦ wobei das trainierte Modell (MLM) des maschinellen Lernens auf Basis von Trainingsdaten (TD) trainiert wurde, wobei die Trainingsdaten (TD) für jeden Gegenstand einer Vielzahl von Gegenständen i) mindestens eine Referenz-Bildaufnahme ($RI_i$) eines in eine Oberfläche des Gegenstands eingebrachten optischen Codes als Eingabedaten und ii) eine transformierte Referenz-Bildaufnahme ($RI^*_i$) des optischen Codes als Zieldaten umfassen, wobei das Dekodieren des optischen Codes in der transformierten Referenz-Bildaufnahme ($RI^*_i$) weniger Dekodierfehler erzeugt als das Dekodieren des optischen Codes in der Referenz-Bildaufnahme ($RI_i$), wobei das Trainieren für jeden Gegenstand der Vielzahl an Gegenständen umfasst:

      ▪ Eingeben der mindestens einen Referenz-Bildaufnahme ($RI_i$) in das Modell (MLM) des maschinellen Lernens,
      ▪ Empfangen einer vorhergesagten transformierten Referenz-Bildaufnahme ($I^*_i$) von dem Modell (MLM) des maschinellen Lernens,
      ▪ Berechnen einer Abweichung zwischen der transformierten Referenz-Bildaufnahme ($RI^*_i$) und der vorhergesagten transformierten Referenz-Bildaufnahme ($I^*_i$),
      ▪ Modifizieren der Modellparameter (MP) im Hinblick auf eine Reduzierung der Abweichung,

- Dekodieren des in der transformierten Bildaufnahme (I*) abgebildeten optisch lesbaren Codes.

2. Verfahren gemäß Anspruch 1, wobei es sich bei dem Gegenstand (O) um ein pflanzliches oder tierisches Erzeugnis handelt.

3. Verfahren gemäß Anspruch 1, wobei es sich bei dem Gegenstand (O) um ein Arzneimittel in Form einer Tablette oder einer Kapsel handelt.

4. Verfahren gemäß Anspruch 1, wobei es sich bei dem Gegenstand (O) um ein Werkzeug, ein Maschinenbauteil, eine Platine, einen Halbleiterchip, einen Behälter, eine Verpackung, einen Schmuckgegenstand, ein Designobjekt oder ein Kunstobjekt handelt.

5. Verfahren gemäß einem der Ansprüche 1 bis 4, wobei für jeden Gegenstand der Vielzahl von Gegenständen die transformierte Referenz-Bildaufnahme ($RI^*_i$) durch Anwenden einer oder mehrerer Transformationen ($T_1$, $T_2$) auf die mindestens eine Referenz-Bildaufnahme ($RI_i$) erzeugt wurde, wobei die eine oder die mehreren Transformationen ($T_1$, $T_2$) so gewählt wurden, dass das Auslesen des optisch lesbaren Codes in der transformierten Referenz-Bildaufnahme ($RI^*_i$) zu weniger Dekodierfehlern führt als das Auslesen des optisch lesbaren Codes in der mindestens einen Referenz-Bildaufnahme ($RI_i$).

6. Verfahren gemäß Anspruch 5, wobei die eine oder die mehreren Transformationen ($T_1$, $T_2$) empirisch ermittelt wurden.

7. Verfahren gemäß einem der Ansprüche 1 bis 6, wobei der optisch lesbare Code mittels eines Lasers in die Oberfläche des Gegenstands (O) eingebracht worden ist.

8. Verfahren gemäß einem der Ansprüche 1 bis 7, ferner umfassend den Schritt:

- Ausgeben des dekodierten optisch lesbaren Codes (OI) und/oder von Informationen, die mit dem dekodierten Code (OI) verknüpft sind.

9.  Verfahren gemäß einem der Ansprüche 1 bis 8, wobei das Identifizieren des in der mindestens einen Bildaufnahme (I) gezeigten Gegenstands (O) mittels eines Modells (MLM) des maschinellen Lernens erfolgt, wobei das Modell (MLM) des maschinellen Lernens trainiert ist, eine Bildaufnahme (I) dem in der mindestens einen Bildaufnahme (I) gezeigten Gegenstand (O) zuzuordnen.

10. Verfahren gemäß einem der Ansprüche 1 bis 9, wobei es sich bei dem optisch lesbaren Code um einen Matrixcode handelt.

11. Verfahren gemäß einem der Ansprüche 1 bis 10, wobei die Transformationen ($T_1$, $T_2$) eine oder mehrere der folgenden Wirkungen aufweisen:

    - Verzeichniskorrektur,
    - Reduzieren und/oder Eliminieren von Lichtreflexen,
    - Erhöhen des Kontrasts zwischen dem optisch lesbaren Code und seiner Umgebung.

12. Verfahren gemäß einem der Ansprüche 1 bis 11, wobei das Modell (MLM) des maschinellen Lernens ein künstliches neuronales Netzwerk ist oder ein solches umfasst.

13. Verfahren gemäß einem der Ansprüche 1 bis 12, wobei ein Teil der Transformationen ($T_1$, $T_2$) mittels Bildbearbeitungsverfahren erfolgt, die nicht auf der Verwendung eines Modells (MLM) des maschinellen Lernens basieren.

14. System umfassend mindestens einen Prozessor, wobei der Prozessor konfiguriert ist,

    - mindestens eine Bildaufnahme (I) von einem Gegenstand (O) zu empfangen, wobei der Gegenstand (O) einen optisch lesbaren Code umfasst, wobei der optisch lesbare Code in eine Oberfläche des Gegenstands (O) eingebracht ist,
    - den Gegenstand (O) auf Basis der mindestens einen Bildaufnahme (I) zu identifizieren,
    - Transformationsparameter für den identifizierten Gegenstand (O) aus einer Datenbank auszulesen,
    - eine oder mehrere Transformationen ($T_1$, $T_2$) der mindestens einen Bildaufnahme (I) gemäß den Transformationsparametern durchzuführen und dabei eine transformierte Bildaufnahme (I*) zu erzeugen,

        ○ wobei die Transformationsparameter festlegen, welche Transformation/Transformationen ($T_1$, $T_2$) durchgeführt werden, und bei mehreren Transformationen ($T_1$, $T_2$), in welcher Reihenfolge sie durchgeführt werden,
        ○ wobei mindestens eine Transformation ($T_1$, $T_2$) mit Hilfe eines trainierten Modells (MLM) des maschinellen Lernens durchgeführt wird, wobei das Durchführen einer Transformation ($T_1$, $T_2$) mit Hilfe des trainiertes Modells (MLM) des maschinellen Lernens umfasst:

            ▪ Zuführen der mindestens einen Bildaufnahme (I) dem trainierten Modell (MLM) des maschinellen Lernens,
            ▪ Empfangen einer transformierten Bildaufnahme (I*) von dem trainierten Modell (MLM) des maschinellen Lernens,

        ○ wobei das trainierte Modell (MLM) des maschinellen Lernens auf Basis von Trainingsdaten (TD) trainiert wurde, wobei die Trainingsdaten (TD) für jeden Gegenstand einer Vielzahl von Gegenständen i) mindestens eine Referenz-Bildaufnahme ($RI_i$) eines in eine Oberfläche des Gegenstands eingebrachten optischen Codes als Eingabedaten und ii) eine transformierte Referenz-Bildaufnahme ($RI*_i$) des optischen Codes als Zieldaten umfassen, wobei das Dekodieren des optischen Codes in der transformierten Referenz-Bildaufnahme ($RI*_i$) weniger Dekodierfehler erzeugt als das Dekodieren des optischen Codes in der Referenz-Bildaufnahme ($RI_i$), wobei das Trainieren für jeden Gegenstand der Vielzahl an Gegenständen umfasst:

            ▪ Eingeben der mindestens einen Referenz-Bildaufnahme ($RI_i$) in das Modell (MLM) des maschinellen Lernens,
            ▪ Empfangen einer vorhergesagten transformierten Referenz-Bildaufnahme ($I*_i$) von dem Modell (MLM) des maschinellen Lernens,

■ Berechnen einer Abweichung zwischen der transformierten Referenz-Bildaufnahme (RI*$_i$) und der vorhergesagten transformierten Referenz-Bildaufnahme (I*$_i$),
■ Modifizieren der Modellparameter (MP) im Hinblick auf eine Reduzierung der Abweichung,

- den in der transformierten Bildaufnahme **(I\*)** abgebildeten optisch lesbaren Code zu dekodieren

15. Computerprogrammprodukt umfassend einen Datenträger, auf dem ein Computerprogramm gespeichert ist, wobei das Computerprogramm, wenn es in einen Arbeitsspeicher eines Computers geladen und von dem Computer ausgeführt wird, den Computer veranlasst, folgende Schritte ausführen:

- Empfangen mindestens einer Bildaufnahme (I) von einem Gegenstand (O), wobei der Gegenstand (O) einen optisch lesbaren Code umfasst, wobei der optisch lesbare Code in eine Oberfläche des Gegenstands (O) eingebracht ist,
- Identifizieren des Gegenstands (O) auf Basis der mindestens einen Bildaufnahme (I),
- Auslesen von Transformationsparametern für den identifizierten Gegenstand (O) aus einer Datenbank,
- Durchführen einer oder mehrerer Transformationen (T$_1$, T$_2$) der mindestens einen Bildaufnahme (I) gemäß den Transformationsparametern und dabei Erzeugen einer transformierten Bildaufnahme (I*),

◦ wobei die Transformationsparameter festlegen, welche Transformation/Transformationen (T$_1$, T$_2$) durchgeführt werden, und bei mehreren Transformationen (T$_1$, T$_2$), in welcher Reihenfolge sie durchgeführt werden,
◦ wobei mindestens eine Transformation (T$_1$, T$_2$) mit Hilfe eines trainierten Modells (MLM) des maschinellen Lernens durchgeführt wird, wobei das Durchführen einer Transformation (T$_1$, T$_2$) mit Hilfe des trainiertes Modells (MLM) des maschinellen Lernens umfasst:

■ Zuführen der mindestens einen Bildaufnahme (I) dem trainierten Modell (MLM) des maschinellen Lernens,
■ Empfangen einer transformierten Bildaufnahme (I*) von dem trainierten Modell (MLM) des maschinellen Lernens,

◦ wobei das trainierte Modell (MLM) des maschinellen Lernens auf Basis von Trainingsdaten (TD) trainiert wurde, wobei die Trainingsdaten (TD) für jeden Gegenstand einer Vielzahl von Gegenständen i) mindestens eine Referenz-Bildaufnahme (RI$_i$) eines in eine Oberfläche des Gegenstands eingebrachten optischen Codes als Eingabedaten und ii) eine transformierte Referenz-Bildaufnahme (RI*$_i$) des optischen Codes als Zieldaten umfassen, wobei das Dekodieren des optischen Codes in der transformierten Referenz-Bildaufnahme (RI*$_i$) weniger Dekodierfehler erzeugt als das Dekodieren des optischen Codes in der Referenz-Bildaufnahme (RI$_i$), wobei das Trainieren für jeden Gegenstand der Vielzahl an Gegenständen umfasst:
◦ Eingeben der mindestens einen Referenz-Bildaufnahme (RI$_i$) in das Modell (MLM) des maschinellen Lernens,
◦ Empfangen einer vorhergesagten transformierten Referenz-Bildaufnahme (I*$_i$) von dem Modell (MLM) des maschinellen Lernens,
◦ Berechnen einer Abweichung zwischen der transformierten Referenz-Bildaufnahme (RI*$_i$) und der vorhergesagten transformierten Referenz-Bildaufnahme (I*$_i$),
◦ Modifizieren der Modellparameter (MP) im Hinblick auf eine Reduzierung der Abweichung,

- Dekodieren des in der transformierten Bildaufnahme (I*) abgebildeten optisch lesbaren Codes.

**Claims**

1. Computer-implemented method comprising the steps of

- receiving at least one image recording (I) of an object (O), wherein the object (O) comprises an optically readable code, wherein the optically readable code is introduced into a surface of the object (O),
- identifying the object (O) on the basis of the at least one image recording (I),
- reading out transformation parameters for the identified object (O) from a database,
- carrying out one or more transformations (T$_1$, T$_2$) of the at least one image recording (I) in accordance with the transformation parameters and generating a transformed image recording (I*) in the process,

○ wherein the transformation parameters stipulate what transformation/transformations ($T_1$, $T_2$) is/are carried out and, in the case of a plurality of transformations ($T_1$, $T_2$), in what order they are carried out,
○ wherein at least one transformation ($T_1$, $T_2$) is carried out with the aid of a trained machine learning model (MLM), wherein carrying out a transformation ($T_1$, $T_2$) with the aid of the trained machine learning model (MLM) comprises:

- feeding the at least one image recording (I) to the trained machine learning model (MLM),
- receiving a transformed image recording (I*) from the trained machine learning model (MLM),

○ wherein the trained machine learning model (MLM) was trained on the basis of training data (TD), wherein the training data (TD) for each object of a multiplicity of objects comprise i) at least one reference image recording ($RI_i$) of an optical code introduced into a surface of the object as input data and ii) a transformed reference image recording ($RI^*_i$) of the optical code as target data, wherein decoding the optical code in the transformed reference image recording ($RI^*_i$) generates fewer decoding errors than decoding the optical code in the reference image recording ($RI_i$), wherein the training for each object of the multiplicity of objects comprises:

- inputting the at least one reference image recording ($RI_i$) into the machine learning model (MLM),
- receiving a predicted transformed reference image recording ($I^*_i$) from the machine learning model (MLM),
- calculating a deviation between the transformed reference image recording ($RI^*_i$) and the predicted transformed reference image recording ($I^*_i$),
- modifying the model parameters (MP) with regard to reducing the deviation,

- decoding the optically readable code imaged in the transformed image recording (I*).

2. Method according to Claim 1, wherein the object (O) is a plant or animal product.

3. Method according to Claim 1, wherein the object (O) is a medicament in the form of a tablet or capsule.

4. Method according to Claim 1, wherein the object (O) is a tool, a machine component, a circuit board, a semiconductor chip, a container, a packaging, a piece of jewellery, a design object or an art object.

5. Method according to any of Claims 1 to 4, wherein for each object of the multiplicity of objects the transformed reference image recording ($RI^*_i$) was generated by applying one or more transformations ($T_1$, $T_2$) to the at least one reference image recording ($RI_i$), wherein the one or more transformations ($T_1$, $T_2$) were chosen such that reading out the optically readable code in the transformed reference image recording ($RI^*_i$) leads to fewer decoding errors than reading out the optically readable code in the at least one reference image recording ($RI_i$).

6. Method according to Claim 5, wherein the one or more transformations ($T_1$, $T_2$) were determined empirically.

7. Method according to any of Claims 1 to 6, wherein the optically readable code has been introduced into the surface of the object (O) by means of a laser.

8. Method according to any of Claims 1 to 7, furthermore comprising the step of:

- outputting the decoded optically readable code (OI) and/or information linked with the decoded code (OI).

9. Method according to any of Claims 1 to 8, wherein identifying the object (O) shown in the at least one image recording (I) is effected by means of a machine learning model (MLM), wherein the machine learning model (MLM) is trained to assign an image recording (I) to the object (O) shown in the at least one image recording (I).

10. Method according to any of Claims 1 to 9, wherein the optically readable code is a matrix code.

11. Method according to any of Claims 1 to 10, wherein the transformations ($T_1$, $T_2$) have one or more of the following effects:

- distortion correction,

- reducing and/or eliminating light reflections,
- increasing the contrast between the optically readable code and its surroundings.

12. Method according to any of Claims 1 to 11, wherein the machine learning model (MLM) is an artificial neural network or comprises such a network.

13. Method according to any of Claims 1 to 12, wherein a portion of the transformations ($T_1$, $T_2$) is effected by means of image processing methods that are not based on the use of a machine learning model (MLM).

14. System comprising at least one processor, wherein the processor is configured

- to receive at least one image recording (I) of an object (O), wherein the object (O) comprises an optically readable code, wherein the optically readable code is introduced into a surface of the object (O),
- to identify the object (O) on the basis of the at least one image recording (I),
- to read out transformation parameters for the identified object (O) from a database,
- to carry out one or more transformations ($T_1$, $T_2$) of the at least one image recording (I) in accordance with the transformation parameters and to generate a transformed image recording (I*) in the process,

  ○ wherein the transformation parameters stipulate what transformation/transformations ($T_1$, $T_2$) is/are carried out and, in the case of a plurality of transformations ($T_1$, $T_2$), in what order they are carried out,
  ○ wherein at least one transformation ($T_1$, $T_2$) is carried out with the aid of a trained machine learning model (MLM) , wherein carrying out a transformation ($T_1$, $T_2$) with the aid of the trained machine learning model (MLM) comprises:

    ▪ feeding the at least one image recording (I) to the trained machine learning model (MLM),
    ▪ receiving a transformed image recording (I*) from the trained machine learning model (MLM),

  ○ wherein the trained machine learning model (MLM) was trained on the basis of training data (TD), wherein the training data (TD) for each object of a multiplicity of objects comprise i) at least one reference image recording ($RI_i$) of an optical code introduced into a surface of the object as input data and ii) a transformed reference image recording ($RI^*_i$) of the optical code as target data, wherein decoding the optical code in the transformed reference image recording ($RI^*_i$) generates fewer decoding errors than decoding the optical code in the reference image recording ($RI_i$), wherein the training for each object of the multiplicity of objects comprises:

    ▪ inputting the at least one reference image recording ($RI_i$) into the machine learning model (MLM),
    ▪ receiving a predicted transformed reference image recording ($I^*_i$) from the machine learning model (MLM),
    ▪ calculating a deviation between the transformed reference image recording ($RI^*_i$) and the predicted transformed reference image recording ($I^*_i$),
    ▪ modifying the model parameters (MP) with regard to reducing the deviation,

- to decode the optically readable code imaged in the transformed image recording (I*).

15. Computer program product comprising a data carrier on which a computer program is stored, wherein the computer program, when it is loaded into a main memory of a computer and executed by the computer, causes the computer to execute the following steps:

- receiving at least one image recording (I) of an object (O), wherein the object (O) comprises an optically readable code, wherein the optically readable code is introduced into a surface of the object (O),
- identifying the object (O) on the basis of the at least one image recording (I),
- reading out transformation parameters for the identified object (O) from a database,
- carrying out one or more transformations ($T_1$, $T_2$) of the at least one image recording (I) in accordance with the transformation parameters and generating a transformed image recording (I*) in the process,

  ○ wherein the transformation parameters stipulate what transformation/transformations ($T_1$, $T_2$) is/are carried out and, in the case of a plurality of transformations ($T_1$, $T_2$), in what order they are carried out,
  ○ wherein at least one transformation ($T_1$, $T_2$) is carried out with the aid of a trained machine learning model (MLM), wherein carrying out a transformation ($T_1$, $T_2$) with the aid of the trained machine learning model (MLM) comprises:

- feeding the at least one image recording (I) to the trained machine learning model (MLM),
- receiving a transformed image recording (I*) from the trained machine learning model (MLM),

  ◦ wherein the trained machine learning model (MLM) was trained on the basis of training data (TD), wherein the training data (TD) for each object of a multiplicity of objects comprise i) at least one reference image recording ($RI_i$) of an optical code introduced into a surface of the object as input data and ii) a transformed reference image recording ($RI*_i$) of the optical code as target data, wherein decoding the optical code in the transformed reference image recording ($RI*_i$) generates fewer decoding errors than decoding the optical code in the reference image recording ($RI_i$), wherein the training for each object of the multiplicity of objects comprises:

    ◦ inputting the at least one reference image recording ($RI_i$) into the machine learning model (MLM),
    ◦ receiving a predicted transformed reference image recording ($I*_i$) from the machine learning model (MLM),
    ◦ calculating a deviation between the transformed reference image recording ($RI*_i$) and the predicted transformed reference image recording ($I*_i$),
    ◦ modifying the model parameters (MP) with regard to reducing the deviation,

- decoding the optically readable code imaged in the transformed image recording (I*).

## Revendications

1. Procédé mis en œuvre par ordinateur, comprenant les étapes consistant à

   - recevoir au moins une image capturée (I) d'un objet (O), l'objet (O) comprenant un code optiquement lisible, le code optiquement lisible étant intégré dans une surface de l'objet (O),
   - identifier l'objet (O) sur la base de ladite au moins une image capturée (I),
   - lire dans une base de données des paramètres de transformation pour l'objet identifié (O),
   - effectuer une ou plusieurs transformations ($T_1$, $T_2$) de ladite au moins une image capturée (I) conformément aux paramètres de transformation et générer ainsi une image capturée transformée (I*),

     ◦ les paramètres de transformation définissant quelle(s) transformation(s) ($T_1$, $T_2$) est/sont effectuée(s) et, dans le cas de plusieurs transformations ($T_1$, $T_2$), dans quel ordre elles sont effectuées,
     ◦ au moins une transformation ($T_1$, $T_2$) étant effectuée à l'aide d'un modèle (MLM) d'apprentissage automatique entraîné, l'exécution d'une transformation ($T_1$, $T_2$) à l'aide du modèle (MLM) d'apprentissage automatique entraîné consistant à :

       - fournir ladite au moins une image capturée (I) au modèle (MLM) d'apprentissage automatique,
       - recevoir une image capturée transformée (I*) en provenance du modèle (MLM) d'apprentissage automatique entraîné,

     ◦ le modèle (MLM) d'apprentissage automatique entraîné ayant été entraîné sur la base de données d'entraînement (TD), les données d'entraînement (TD) comprenant, pour chaque objet d'une pluralité d'objets, i) au moins une image capturée de référence ($RI_i$) d'un code optique intégré dans une surface de l'objet en tant que données d'entrée et ii) une image capturée de référence transformée ($RI*_i$) du code optique en tant que données cibles, le décodage du code optique dans l'image capturée de référence transformée ($RI*_i$) générant moins d'erreurs de décodage que le décodage du code optique dans l'image capturée de référence ($RI_i$), l'entraînement comprenant, pour chaque objet de la pluralité d'objets :

       - la fourniture en entrée de ladite au moins une image capturée de référence ($RI_i$) au modèle (MLM) d'apprentissage automatique,
       - la réception d'une image capturée de référence transformée prédite ($I*_i$) en provenance du modèle (MLM) d'apprentissage automatique,
       - le calcul d'un écart entre l'image capturée de référence transformée ($RI*_i$) et l'image capturée de référence transformée prédite (I*$_i$),
- la modification des paramètres de modèle (MP) en vue de réduire l'écart,

  - le décodage du code optiquement lisible représenté dans l'image capturée transformée (I*).

2. Procédé selon la revendication 1, dans lequel l'objet (O) est un produit végétal ou animal.

3. Procédé selon la revendication 1, dans lequel l'objet (O) est un médicament sous la forme d'un comprimé ou d'une capsule.

4. Procédé selon la revendication 1, dans lequel l'objet (O) est un outil, un composant de machine, une carte de circuit imprimé, une puce à semi-conducteur, un conteneur, un emballage, un objet de bijouterie, un objet de design ou un objet artificiel.

5. Procédé selon l'une quelconque des revendications 1 à 4, dans lequel, pour chaque objet de la pluralité d'objets, l'image capturée de référence transformée (RI*$_i$) a été générée par application d'une ou plusieurs transformations (T$_1$, T$_2$) à ladite au moins une image capturée de référence (RI$_i$), lesdites une ou plusieurs transformations (T$_1$, T$_2$) ayant été sélectionnées de telle sorte que la lecture du code optiquement lisible dans l'image capturée de référence transformée (RI*$_i$) conduise à moins d'erreurs de décodage que la lecture du code optiquement lisible dans ladite au moins une image capturée de référence (RI$_i$).

6. Procédé selon la revendication 5, dans lequel lesdites une ou plusieurs transformations (T$_1$, T$_2$) ont été déterminées empiriquement.

7. Procédé selon l'une quelconque des revendications 1 à 6, dans lequel le code optiquement lisible a été intégré dans la surface de l'objet (O) au moyen d'un laser.

8. Procédé selon l'une quelconque des revendications 1 à 7, comprenant en outre l'étape consistant à :

  - fournir en sortie le code optiquement lisible décodé (OI) et/ou des informations combinées au code décodé (OI) .

9. Procédé selon l'une quelconque des revendications 1 à 8, dans lequel l'objet (O) représenté dans ladite au moins une image capturée (I) est identifié au moyen d'un modèle (MLM) d'apprentissage automatique, le modèle (MLM) d'apprentissage automatique étant entraîné pour associer une image capturée (I) à l'objet (O) représenté dans ladite au moins une image capturée (I).

10. Procédé selon l'une quelconque des revendications 1 à 9, dans lequel le code optique est un code matriciel.

11. Procédé selon l'une quelconque des revendications 1 à 10, **caractérisé en ce que** les transformations (T$_1$, T$_2$) présentent un ou plusieurs des effets suivants :

  - corriger un répertoire,
  - réduire et/ou éliminer les reflets lumineux,
  - augmenter le contraste entre le code optiquement lisible et son environnement.

12. Procédé selon l'une quelconque des revendications 1 à 11, dans lequel le modèle (MLM) d'apprentissage automatique est ou comprend un réseau neuronal artificiel.

13. Procédé selon l'une quelconque des revendications 1 à 12, dans lequel une partie des transformations (T$_1$, T$_2$) sont effectuées au moyen de procédés de traitement d'image qui ne sont pas basés sur l'utilisation d'un modèle (MLM) d'apprentissage automatique.

14. Système comprenant au moins un processeur, ledit processeur étant configuré pour

  - recevoir une première image capturée (I) d'un objet (O), l'objet (O) comprenant un code optiquement lisible, le code optiquement lisible étant intégré dans une surface de l'objet (O),
  - identifier l'objet (O) sur la base de ladite au moins une image capturée (I),
  - lire dans une base de données des paramètres de transformation pour l'objet identifié (O),

- effectuer une ou plusieurs transformations ($T_1$, $T_2$) de ladite au moins une image capturée (I) conformément aux paramètres de transformation et générer ainsi une image capturée transformée (I*),

◦ les paramètres de transformation définissant quelle(s) transformation (s) ($T_1$, $T_2$) est/sont effectuée(s) et, dans le cas de plusieurs transformations ($T_1$, $T_2$), dans quel ordre elles sont effectuées,
◦ au moins une transformation ($T_1$, $T_2$) étant effectuée à l'aide d'un modèle (MLM) d'apprentissage automatique entraîné, l'exécution d'une transformation ($T_1$, $T_2$) à l'aide du modèle (MLM) d'apprentissage automatique entraîné comprenant les étapes consistant à :

▪ fournir ladite au moins une image capturée (I) au modèle (MLM) d'apprentissage automatique,
▪ recevoir une image capturée transformée (I*) en provenance du modèle (MLM) d'apprentissage automatique entraîné,

◦ le modèle (MLM) d'apprentissage automatique entraîné ayant été entraîné sur la base de données d'entraînement (TD), les données d'entraînement (TD) comprenant, pour chaque objet d'une pluralité d'objets, i) au moins une image capturée de référence ($RI_i$) d'un code optique intégré dans une surface de l'objet en tant que données d'entrée et ii) une image capturée de référence transformée ($RI*_i$) du code optique en tant que données cibles, le décodage du code optique dans l'image capturée de référence transformée ($RI*_i$) générant moins d'erreurs de décodage que le décodage du code optique dans l'image capturée de référence ($RI_i$), l'entraînement comprenant, pour chaque objet de la pluralité d'objets :

▪ la fourniture en entrée de ladite au moins une image capturée de référence ($RI_i$) au modèle (MLM) d'apprentissage automatique,
▪ la réception d'une image capturée de référence transformée prédite ($I*_i$) en provenance du modèle (MLM) d'apprentissage automatique,
▪ le calcul d'un écart entre l'image capturée de référence transformée ($RI*_i$) et l'image capturée de référence transformée prédite ($I*_i$),
▪ la modification des paramètres de modèle (MP) en vue de réduire l'écart,

- le décodage du code optiquement lisible représenté dans l'image capturée transformée (I*).

15. Produit de programme informatique, comprenant un support de données sur lequel est stocké un programme informatique, le programme informatique, lorsqu'il est chargé dans une mémoire vive d'un ordinateur et exécuté par l'ordinateur, amène l'ordinateur à exécuter les étapes suivantes consistant à :

- recevoir au moins une image capturée (I) d'un objet (O), l'objet (O) comprenant un code optiquement lisible, le code optiquement lisible étant intégré dans une surface de l'objet (O),
- identifier l'objet (O) sur la base de ladite au moins une image capturée (I),
- lire dans une base de données des paramètres de transformation pour l'objet identifié (O),
- effectuer une ou plusieurs transformations ($T_1$, $T_2$) de ladite au moins une image capturée (I) conformément aux paramètres de transformation et générer ainsi une image capturée transformée (I*),

◦ les paramètres de transformation définissant quelle(s) transformation (s) ($T_1$, $T_2$) est/sont effectuée(s) et, dans le cas de plusieurs transformations ($T_1$, $T_2$), dans quel ordre elles sont effectuées,
◦ au moins une transformation ($T_1$, $T_2$) étant effectuée à l'aide d'un modèle (MLM) d'apprentissage automatique entraîné, l'exécution d'une transformation ($T_1$, $T_2$) à l'aide du modèle (MLM) d'apprentissage automatique entraîné comprenant les étapes consistant à :

▪ fournir ladite au moins une image capturée (I) au modèle (MLM) d'apprentissage automatique,
▪ recevoir une image capturée transformée (I*) en provenance du modèle (MLM) d'apprentissage automatique entraîné,

◦ le modèle (MLM) d'apprentissage automatique entraîné ayant été entraîné sur la base de données d'entraînement (TD), les données d'entraînement (TD) comprenant, pour chaque objet d'une pluralité d'objets, i) au moins une image capturée de référence ($RI_i$) d'un code optique intégré dans une surface de l'objet en tant que données d'entrée et ii) une image capturée de référence transformée ($RI*_i$) du code optique en tant que données cibles, le décodage du code optique dans l'image capturée de référence transformée ($RI*_i$) générant moins d'erreurs de décodage que le décodage du code optique dans l'image capturée de

référence (RI<sub>i</sub>), l'entraînement comprenant, pour chaque objet de la pluralité d'objets :

    ◦ la fourniture en entrée de ladite au moins une image capturée de référence (RI) au modèle (MLM) d'apprentissage automatique,
    ◦ la réception d'une image capturée de référence transformée prédite (I*) en provenance du modèle (MLM) d'apprentissage automatique,
    ◦ le calcul d'un écart entre l'image capturée de référence transformée (RI*$_i$) et l'image capturée de référence transformée prédite (I*$_i$),
    ◦ la modification des paramètres de modèle (MP) en vue de réduire l'écart,

- le décodage du code optiquement lisible représenté dans l'image capturée transformée (I*).

Fig. 1

Fig. 2

Fig. 3

Fig. 4

**Fig. 5**

**Fig. 6**

**Fig. 7**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2585938 A
- US 20050082370 A1
- EP 3896629 A1
- EP 2281468 A1
- WO 2015117438 A1
- WO 2015117541 A1
- WO 2016118962 A1

- WO 2016118973 A1
- DE 102005019008 A
- WO 2007130968 A2
- US 5660747 A
- EP 1737306 A2
- US 10481589 B
- US 20080124433 A

**In der Beschreibung aufgeführte Nicht-Patentliteratur**

- **H. PU et al.** Quick response barcode deblurring via douly convolutional neural network. *Multimed Tools Appl*, 2019, vol. 78, 897-912
- **CHRISTOPHER CUMO**. Encyclopedia of Cultivated Plants: From Acacia to Zinnia. ABC-CLIO, 2013, vol. 1-3
- **J. PARK et al.** Lens Distortion Correction Using Ideal Image Coordinates. *Consumer Electronics IEEE Transactions on*, 2009, vol. 55, 987-991

- **X. WANG** ; **R. KLETTE**. *Geometrie Correction of Projected Rectangular Pictures*, 2005, http://citr.auckland.ac.nz/techreports/2005/CITR-TR-167.pdf
- **W. BURGER** ; **M. J. BURGE**. Digital Image Processing - An Algorithmic Introduction using Java. Springer-Verlag, 2016